# EUROPEAN PATENT APPLICATION

(11) **EP 4 447 507 A1**
(43) Date of publication of application: **16.10.2024**
(21) Application number: 23739837.5
(22) Date of filing: 03.01.2023
(51) Int. Cl.: H04W 8/14

(54) **COMMUNICATION METHOD AND APPARATUS**

(30) Priority: 17.01.2022 CN 202210050678
(71) Applicant: Huawei Technologies Co., Ltd., Shenzhen, Guangdong 518129 (CN)
(72) Inventor: FENG, Zhao, Shenzhen, Guangdong 518129 (CN); XIN, Yang, Shenzhen, Guangdong 518129 (CN); WANG, Yuan, Shenzhen, Guangdong 518129 (CN)
(74) Representative: MERH-IP Matias Erny Reichl Hoffmann Patentanwälte PartG mbB
(86) International application number: PCT/CN2023/070049
(87) International publication number: WO 2023/134493

(57) **Abstract**

Embodiments of this application provide a communication method and a communication apparatus. The method includes: A first network element receives a first message and a second message. The first message is used to subscribe to first data, and the second message is used to subscribe to second data. The first network element subscribes to the first data from a second network element based on the first message. The first network element determines whether the second data can be obtained from the first data. The first network element determines, based on a determining result, whether to subscribe to third data from the second network element. The third data includes all or a part of the second data. According to the method in this application, the first network element determines, based on the determining result, whether to subscribe to the second data from the second network element, to avoid subscribing to repeated data from the second network element, and prevent the second network element from repeatedly collecting and reporting same data. Therefore, according to the method in embodiments of this application, a resource can be saved, and load of the first network element and the second network element can be reduced.

## Description

This application claims priority to Chinese Patent Application No. 202210050678.5, filed with the China National Intellectual Property Administration on January 17, 2022 and entitled "COMMUNICATION METHOD AND APPARATUS", which is incorporated herein by reference in its entirety.

### TECHNICAL FIELD

This application relates to the field of communication technologies, and more specifically, to a communication method and apparatus.

### BACKGROUND

Currently, a network data analytics function (network data analytics function, NWDAF) network element has a data analytics function. To implement the data analytics function, the NWDAF network element needs to collect data from another network element, for example, a user plane function (user plane function, UPF) network element. In a conventional technology, the NWDAF directly subscribes, from another network element, to data that needs to be obtained. Such a data obtaining manner easily causes a waste of resources.

### SUMMARY

This application provides a communication method and apparatus, so that a waste of resources can be avoided in a data subscription process.

According to a first aspect, a communication method is provided. The communication method includes:
A first network element receives a first message and a second message. The first message is used to subscribe to first data, and the second message is used to subscribe to second data. The first network element subscribes to the first data from a second network element based on the first message. The first network element determines whether the second data can be obtained based on the first data. The first network element determines, based on a determining result, whether to subscribe to third data from the second network element. The third data includes all or a part of the second data.

According to the method in this application, the first network element determines, based on the determining result, whether to subscribe to the second data from the second network element, to avoid subscribing to repeated data from the second network element, and prevent the second network element from repeatedly collecting and reporting same data. Therefore, according to the method in this application, a resource can be saved, and load of the first network element and the second network element can be reduced.

With reference to the first aspect, in some implementations of the first aspect,
the first message includes a first association identifier, and that the first network element subscribes to the first data from a second network element includes:
The first network element sends a third message to the second network element. The third message is used to subscribe to the first data, and the third message includes a third association identifier.

The method further includes:
The first network element receives a first notification message from the second network element. The first notification message includes the first data and the third association identifier. The first network element determines, based on a first relationship, that the third association identifier in the first notification message corresponds to the first association identifier. The first relationship is a correspondence between the first association identifier and the third association identifier. The first network element sends the first data based on the first association identifier.

With reference to the first aspect, in some implementations of the first aspect,
the determining result is that the second data can be obtained based on the first data, the second message includes a second association identifier, and the method further includes:
The first network element determines a first manner in which the second data is obtained based on the first data. The first network element determines, based on a second relationship, that the third association identifier in the first notification message corresponds to the second association identifier and the first manner. The second relationship is a correspondence between the second association identifier, the third association identifier, and the first manner. The first network element obtains the second data based on the first manner and the first data. The first network element sends the second data based on the second association identifier.

With reference to the first aspect, in some implementations of the first aspect,
the second message includes the second association identifier, the second data includes a first part of data and a second part of data, and the determining result is that the first part of data can be obtained based on the first data, but the second part of data cannot be obtained based on the first data.

The method further includes:
The first network element determines a second manner in which the first part of data is obtained based on the first data. The first network element sends a fourth message to the second network element. The fourth message is used to subscribe to the second part of data, but is not used to subscribe to the first part of data. The fourth message includes a fourth association identifier. The first notification message further includes the second part of data and the fourth association identifier. The first network element determines, based on a third relationship, that the fourth association identifier in the first notification message corresponds to the second association identifier. The third relationship is a correspondence between the second association identifier and the fourth association identifier. The first network element determines, based on a fourth relationship, that the third association identifier in the first notification message corresponds to the second association identifier and the second manner. The fourth relationship is a correspondence between the second association identifier, the third association identifier, and the second manner. The first network element obtains the first part of data based on the second manner and the first data. The first network element sends the first part of data and the second part of data based on the second association identifier.

With reference to the first aspect, in some implementations of the first aspect,
the second message includes a second association identifier, the second data includes a first part of data and a second part of data, and the determining result is that the first part of data can be obtained based on the first data, but the second part of data cannot be obtained based on the first data.

The method further includes:
The first network element sends a fifth message to the second network element based on the second message. The fifth message is used to subscribe to the second data from the second network element. The fifth message includes a fourth association identifier. The first network element determines a second manner in which the first part of data is obtained based on the first data. The first network element determines, based on a third relationship, that the fourth association identifier in the first notification message corresponds to the second association identifier. The first notification message further includes the second part of data and the fourth association identifier. The third relationship is a correspondence between the second association identifier and the fourth association identifier. The first network element determines, based on a fourth relationship, that the third association identifier in the first notification message corresponds to the second association identifier and the second manner. The fourth relationship is a correspondence between the second association identifier, the third association identifier, and the second manner. The first network element obtains the first part of data based on the second manner and the first data. The first network element sends the first part of data and the second part of data based on the second association identifier.

With reference to the first aspect, in some implementations of the first aspect,
the first message includes a first association identifier, and that the first network element subscribes to the first data from a second network element includes:
The first network element sends a third message to the second network element. The third message is used to subscribe to the first data from the second network element, and the third message includes a third association identifier and an identifier of a third network element.

The method further includes:
The first network element sends a first relationship to the third network element. The first relationship is a correspondence between the first association identifier and the third association identifier.

With reference to the first aspect, in some implementations of the first aspect,
the second message includes a second association identifier, and the determining result is that the second data can be obtained based on the first data, and the method further includes:
The first network element determines a first manner in which the second data is obtained based on the first data. The first network element sends a second relationship to the third network element. The second relationship is a correspondence between the second association identifier, the third association identifier, and the first manner.

With reference to the first aspect, in some implementations of the first aspect,
the second message includes a second association identifier, the second data includes a first part of data and a second part of data, and the determining result is that the first part of data can be obtained based on the first data, but the second part of data cannot be obtained based on the first data.

The method further includes:
The first network element determines a second manner in which the first part of data is obtained based on the first data. The first network element sends a fourth message to the second network element. The fourth message is used to subscribe to the second part of data. The fourth message includes a fourth association identifier. The first network element sends a third relationship and a fourth relationship to the third network element. The third relationship is a correspondence between the second association identifier and the fourth association identifier. The fourth relationship is a correspondence between the second association identifier, the third association identifier, and the second manner.

With reference to the first aspect, in some implementations of the first aspect,
the second message includes a second association identifier, the second data includes a first part of data and a second part of data, and the determining result is that the first part of data can be obtained based on the first data, but the second part of data cannot be obtained based on the first data.

The method further includes:
The first network element sends a fifth message to the second network element based on the second message. The fifth message is used to subscribe to the second data from the second network element. The fifth message includes a fourth association identifier. The first network element determines a second manner in which the first part of data is obtained based on the first data. The first network element sends a third relationship and a fourth relationship to the third network element. The third relationship is a correspondence between the second association identifier and the fourth association identifier. The fourth relationship is a correspondence between the second association identifier, the third association identifier, and the second manner.

With reference to the first aspect, in some implementations of the first aspect, the third message is further used to unsubscribe from the first part of data from the second network element.

With reference to the first aspect, in some implementations of the first aspect,
the method further includes: The first network element sends a fifth message to the second network element based on the second message. The fifth message is used to subscribe to the second data from the second network element. The fifth message includes a fourth association identifier.

The third message is further used to unsubscribe from the second data from the second network element.

With reference to the first aspect, in some implementations of the first aspect,
the first message further includes a plurality of data types associated with the first data, a plurality of reporting conditions, and a logical relationship between the plurality of reporting conditions, and the plurality of data types are in one-to-one correspondence with the plurality of reporting conditions. The method further includes:
When the logical relationship is met, the first network element receives the first data from the second network element.

With reference to the first aspect, in some implementations of the first aspect,
the first network element is a data collection coordination function network element, the second network element is a user plane function network element, and the third network element is a messaging framework adaptor function network element.

That a first network element receives a first message and a second message includes:
The first network element receives the first message from a first network data analytics function network element, and receives the second message from a second network data analytics function network element.

According to a second aspect, a communication method is provided. The communication method includes:
A third network element receives a first relationship and a second relationship from a first network element. The first relationship is a correspondence between a first association identifier and a third association identifier. The second relationship is a correspondence between a second association identifier, the third association identifier, and a first manner. The third network element receives a first notification message from a second network element. The first notification message includes first data and the third association identifier. The third network element determines, based on the first relationship, that the third association identifier in the first notification message corresponds to the first association identifier. The third network element sends the first data based on the first association identifier. The third network element determines, based on the second relationship, that the third association identifier in the first notification message corresponds to the second association identifier and the first manner. The third network element obtains second data based on the first manner and the first data. The third network element sends the second data based on the second association identifier.

According to a third aspect, a communication method is provided. The communication method includes:
A third network element receives a first relationship, a third relationship, and a fourth relationship from a first network element. The first relationship is a correspondence between a first association identifier and a third association identifier. The third relationship is a correspondence between a second association identifier and a fourth association identifier. The fourth relationship is a correspondence between the second association identifier, the third association identifier, and a second manner. The third network element receives a first notification message from a second network element. The first notification message includes first data and the third association identifier, and a second part of data and the fourth association identifier. The third network element determines, based on the first relationship, that the third association identifier in the first notification message corresponds to the first association identifier. The third network element sends the first data based on the first association identifier. The third network element determines, based on the third relationship, that the fourth association identifier in the first notification message corresponds to the second association identifier. The third network element determines, based on the fourth relationship, that the third association identifier in the first notification message corresponds to the second association identifier and the second manner. The third network element obtains a first part of data based on the second manner and the first data. The third network element sends the first part of data and the second part of data based on the second association identifier.

According to a fourth aspect, a communication apparatus is provided. The communication apparatus includes a unit configured to perform the method according to any one of the possible implementations of the first aspect to the third aspect.

According to a fifth aspect, a communication device is provided. The communication device includes a communication interface and a processor. When the communication device runs, the processor executes a computer program or instructions stored in a memory, to enable the communication device to perform the method according to any one of the possible implementations of the first aspect to the third aspect. The memory may be located in the processor, or may be implemented by using a chip independent of the processor. This is not specifically limited in this application.

According to a sixth aspect, a computer-readable storage medium is provided. The computer-readable storage medium includes a computer program. When the computer program is run on a computer, the computer is enabled to perform the method according to any one of the possible implementations of the first aspect to the third aspect.

According to a seventh aspect, a chip or a chip system is provided. The chip or the chip system includes a processing circuit. The processing circuit is configured to perform the method according to any one of the possible implementations of the first aspect to the third aspect.

According to an eighth aspect, a computer program product is provided. The computer program product includes a computer program (which may also be referred to as code or instructions). When the computer program is run, a computer is enabled to perform the method according to any one of the possible implementations of the first aspect to the third aspect.

### BRIEF DESCRIPTION OF DRAWINGS

FIG. 1A shows a system architecture to which an embodiment of this application is applicable;
FIG. 1B is a diagram of a communication network architecture to which an embodiment of this application is applicable;
FIG. 2 is a schematic interaction diagram of a method according to this application;
FIG. 3 is a schematic interaction diagram of a method according to this application;
FIG. 4 is a schematic interaction diagram of a method according to this application;
FIG. 5 is a schematic interaction diagram of a method according to this application;
FIG. 6 is a schematic interaction diagram of a method according to this application;
FIG. 7 is a schematic interaction diagram of a method according to this application;
FIG. 8 is a schematic interaction diagram of a method according to this application;
FIG. 9 is a schematic interaction diagram of a method according to this application;
FIG. 10 is a schematic interaction diagram of a method according to this application;
FIG. 11 is a schematic interaction diagram of a method according to this application;
FIG. 12 is a schematic interaction diagram of a method according to this application;
FIG. 13 is a schematic interaction diagram of a method according to this application;
FIG. 14 is a schematic interaction diagram of a method according to this application;
FIG. 15 is a schematic block diagram of a communication apparatus according to this application; and
FIG. 16 is a schematic block diagram of a communication device according to this application.

### DESCRIPTION OF EMBODIMENTS

The following describes the technical solutions of embodiments in this application with reference to the accompanying drawings.

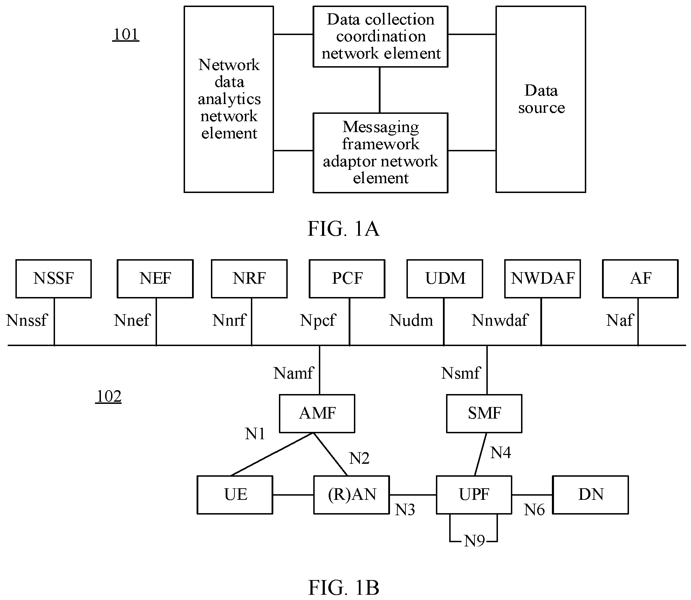

FIG. 1A shows a system architecture 101 to which a method in this application is applicable. The system architecture includes a network data analytics network element, a data collection coordination network element, a messaging framework adaptor network element, and a data source.

The network data analytics network element is configured to: collect data from the data source, train an artificial intelligence (artificial intelligence, AI) model (also referred to as a machine learning (machine learning, ML) model) by using the collected data, perform data inference by using the AI model, and feed back an inference result to a corresponding core network element or operations, administration and management (operations, administration and management, OAM) network element. For example, the network data analytics network element may be a network data analytics function (network data analytics function, NWDAF) network element.

The data collection coordination network element is responsible for coordinating collection and forwarding of data requested by a network function (network function, NF). For example, the data collection coordination network element may be a data collection coordination function (data collection coordination function, DCCF) network element.

The messaging framework adaptor network element is responsible for data processing, formatting, receiving data from the data source, sending data to the NF, and the like that are related to an interface of the data collection coordination network element. For example, the messaging framework adaptor network element may be a messaging framework adaptor function (messaging framework adaptor function, MFAF) network element.

The data source may be an application function (application function, AF) network element, or may be a core network element, for example, an access and mobility management function (access and mobility management function, AMF) network element, a session management function (session management function, SMF) network element, or a user plane function (user plane function, UPF) network element, or may be an OAM network element.

FIG. 1B is a diagram of a communication network architecture 102. Specifically, the network architecture may include the following network elements.
1. A user equipment (user equipment, UE) may include various handheld devices having a wireless communication function, vehicle-mounted devices, wearable devices, computing devices, or other processing devices connected to a wireless modem, and various forms of terminals, mobile stations (mobile stations, MSs), terminals (terminals), soft clients, or the like, for example, water meters, electricity meters, and sensors.
2. A (radio) access network (radio access network, (R)AN) device is configured to provide a network access function for an authorized user equipment in a specific area, and can use transmission tunnels of different quality based on user equipment levels, service requirements, or the like.
   The RAN can manage a radio resource and provide an access service for a user equipment, to complete forwarding of a control signal and user equipment data between the user equipment and a core network. The RAN may also be understood as a base station in a conventional network.
3. A user plane function (user plane function, UPF) network element is configured to perform packet routing and forwarding, quality of service (quality of service, QoS) handling of the user plane data, and the like. User data may be accessed to a data network (data network, DN) through the network element. In embodiments of this application, the user plane function network element may be configured to implement a function of a user plane network element.
4. A data network (data network, DN) is a network for providing data transmission, for example, an operator service network, an internet (internet), and a third-party service network.
5. An authentication server function (authentication server function, AUSF) network element is mainly configured to perform user authentication and the like.
6. An access and mobility management function (access and mobility management function, AMF) network element is mainly configured to perform mobility management, access management, and the like, and may be configured to implement a function, for example, access authorization/authentication, other than session management in functions of a mobility management entity (mobility management entity, MME).
7. A session management function (session management function, SMF) network element is mainly configured to perform session management, allocation and management of an internet protocol (internet protocol, IP) address of a terminal device, selection and management of a user plane function, a termination point of a policy control and charging function interface, downlink data notification, and the like.
8. A policy control function (policy control function, PCF) network element is configured to guide a unified policy framework of a network behavior, and provide policy rule information and the like for a network element (for example, the AMF network element and the SMF network element) or a terminal device.
9. A network repository function (network repository function, NRF) network element is configured to store description information of a network function entity and a service provided by the network function entity, and support functions such as service discovery and network element entity discovery.
10. A network exposure function (network exposure function, NEF) network element is configured to securely expose, to the outside, a service, a capability, and the like that are provided by a 3rd Generation Partnership Project (3GPP) network function.
11. A unified data management (unified data management, UDM) network element is configured to perform unified data management, 5G user data management, user identification handling, access authentication, registration, mobility management, or the like.
12. An application function (application function, AF) network element is configured to: route data affected by an application, access a network exposure function network element, interact with a policy framework to perform policy control, and so on.
13. Network data analytics function (network data analytics function, NWDAF) network element: The NWDAF may have at least one of the following functions:
   data collection, model training, model feedback, analytics inference, analytics feedback, and the like. The data collection function refers to collecting data from a network element, a third-party server, a terminal device, or a network management system. The model training function refers to performing analysis and training based on related input data to obtain a model. The model feedback function refers to sending a trained machine learning model to a network element that supports an inference function. The analytics inference function is to determine data analytics based on the trained machine learning model and inference data. The analytics feedback function may be used to provide data analytics for the network element, the third-party server, the terminal device, or the network management system. The data analytics result may be used to, for example, assist a network in selecting a quality of service parameter of a service, assist a network in performing traffic routing, or assist a network in selecting a background traffic transmission policy.

A typical application scenario of the NWDAF includes: terminal parameter customization or optimization, where to be specific, the NWDAF collects information about user connection management, mobility management, session management, an accessed service, and the like, evaluates and analyzes users of different types by using a reliable analytics and prediction model, to construct user profiles, determines moving tracks and service usage habits of the users, and optimizes user mobility management parameters, radio resource management parameters, and the like; service (path) optimization, where to be specific, the NWDAF collects information such as network performance, service load in a specific area, user service experience, and the like, evaluates and analyzes services of different types by using a reliable network performance analytics and prediction model, to construct service profiles, determines an internal association of quality of experience (quality of experience, QoE) of a service, service experience (service experience), a service path, a 5G quality of service (quality of service, QoS) parameter, or the like, and optimizes the service path, service routing, 5G edge computing, 5G QoS corresponding to the service, and the like; and optimization of a service parameter by the AF. For example, an internet of vehicles is an important technology of a 5G network. In an automatic driving scenario of the internet of vehicles, network performance (such as QoS information and service load) of a base station that a vehicle is about to pass can be predicted to improve quality of service of the internet of vehicles. For example, a server of the internet of vehicles may determine, based on predicted information about the network performance, whether to continue to maintain a self-driving mode. The NWDAF collects information about the network performance, the service load in the specific area, and the like, and collects statistics on and predicts the network performance by using the reliable network performance analytics and prediction model. This helps the AF optimize the parameter.

In embodiments of this application, the NWDAF may be an independent network element, or may be integrated with another network element. For example, the NWDAF network element may be co-located with an AMF or co-located with an SMF.

In addition, the network architecture may further include: a network slice selection function (network slice selection function, NSSF) network element, configured to manage information related to a network slice; and a service communication proxy (service communication proxy, SCP), configured to support indirect communication, that is, support message forwarding and routing between a service invoking network element and a service providing network element, selection and discovery of the service providing network element, and the like. It should be understood that the foregoing enumerated network elements included in the communication system are merely examples for description, and this application is not limited thereto.

In the foregoing network architecture, an N2 interface is an interface between the RAN and the AMF network element, and is configured to send a radio parameter, non-access stratum (non-access stratum, NAS) signaling, and the like. An N3 interface is an interface between the RAN and the UPF network element, and is configured to transmit user plane data and the like. An N4 interface is an interface between the SMF network element and the UPF network element, and is configured to transmit information such as a service policy, tunnel identification information of an N3 connection, data buffer indication information, and a downlink data notification message. An N6 interface is an interface between the DN network element and the UPF network element and is configured to transmit the user plane data and the like.

It should be understood that, in the foregoing network architecture, information may be exchanged between the network elements through a service-based interface. For example, the NWDAF network element may collect, from other network elements (such as the AMF and the SMF) through service-based interfaces (such as Namf and Nsmf) provided by these network elements, data generated by the terminal on the network elements, and provide data analytics (Analytics) and models, which are also referred to as machine learning models (machine learning models), data (data), and the like, to other network elements (such as the AMF and the PCF) through an Nwdaf interface.

It should be understood that the foregoing network architecture to which embodiments of this application are applied is merely an example of a network architecture described from a perspective of a conventional point-to-point architecture and a service-based architecture, and a network architecture to which embodiments of this application are applicable is not limited thereto. Embodiments of this application are applicable to any network architecture that can implement functions of the foregoing network elements.

It should be noted that names of the network elements and interfaces in this application are merely examples. This application does not exclude a case in which the network elements have other names and functions of the network elements are combined. With evolution of technologies, any device or network element that can implement functions of the foregoing network elements falls within the protection scope of this application. In addition, the foregoing network element may also be referred to as an entity, a device, an apparatus, a module, or the like. This is not particularly limited in this application. In addition, in this application, for ease of understanding and description, the description of the network element is omitted in some descriptions. For example, the NWDAF network element is referred to as an NWDAF for short. In this case, the "NWDAF" should be understood as the NWDAF network element. Same or similar cases are not described below.

For ease of description, the following describes the method in this application by using an example in which a first network element is the DCCF network element, a second network element is the UPF network element, a third network element is the MFAF network element, and there are two NWDAF network elements. It should be understood that a quantity of NWDAF network elements is not limited in this application, that is, there may be one or more NWDAF network elements.

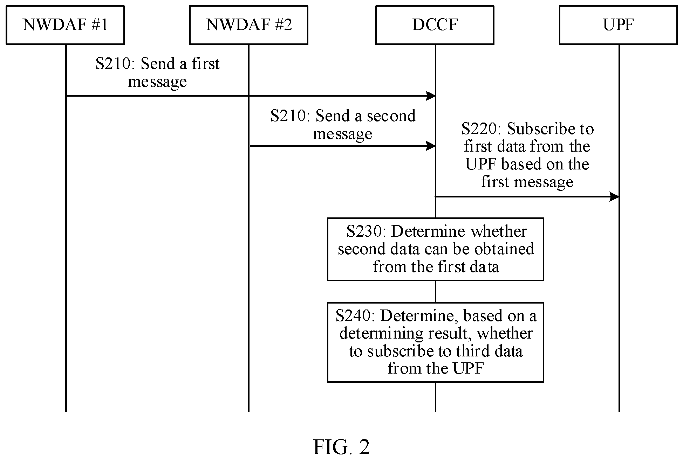

FIG. 2 shows a method 200 according to this application. The method 200 includes the following steps.

S210: A DCCF receives a first message and a second message.

The first message is used to subscribe to first data, and the second message is used to subscribe to second data.

For example, a data granularity of the second data is greater than a data granularity of the first data. The data granularity may be at a quality of service flow (quality of service flow, QoS flow) level, a network element level, an application level, or a user level.

For example, a user-level data granularity is greater than a QoS flow-level data granularity.

For example, NWDAF #1 sends the first message to the DCCF. NWDAF #2 sends the second message to the DCCF.

For example, NWDAF #1 sends the first message and the second message to the DCCF.

In a manner, the DCCF may simultaneously receive the first message and the second message.

In another manner, the DCCF may first receive the first message, and then receive the second message.

In another manner, the DCCF may first receive the second message, and then receive the first message.

S220: The DCCF subscribes to the first data from a UPF based on the first message.

S230: The DCCF determines whether the second data can be obtained from the first data.

S240: The DCCF determines, based on a determining result, whether to subscribe to third data from the UPF, where the third data includes all or a part of the second data.

Descriptions are provided below in different cases.

### Case 1:

If the determining result is that the second data can be obtained from the first data, the DCCF does not subscribe to the second data from the UPF.

### Case 2:

If the determining result is that the second data cannot be obtained from the first data, the DCCF subscribes to the second data from the UPF.

### Case 3:

The second data includes a first part of data and a second part of data. The determining result is that the first part of data can be obtained from the first data, but the second part of data cannot be obtained from the first data. In this case, the DCCF subscribes to the second part of data from the UPF, but does not subscribe to the first part of data from the UPF.

According to the method in this application, the DCCF determines, based on the determining result, whether to subscribe to the second data from the UPF, to avoid subscribing to repeated data from the UPF, and prevent the UPF from repeatedly collecting same data, to reduce impact on UPF performance.

The following describes the method in this application in detail with reference to several specific embodiments.

### Embodiment 1

S301: NWDAF #1 sends a first message to a DCCF. Correspondingly, the DCCF receives the first message.

The first message is used to subscribe to first data. The first message includes a data granularity of the first data, a data type of the first data, and identifier # 1 (where, for example, identifier # 1 is a first association identifier).

For example, the first message may be a data management subscription (Ndccf_DataManagement_Subscribe) message. The first message includes an event identifier (event ID). The event ID identifies an event type of a subscription request. In this application, the event ID further indicates the data granularity of the first data. For example, the data granularity of the first data is at a QoS flow level.

For example, the first message further includes a data collection range of the first data. For example, an event filter (event filter) indicates the data collection range of the first data.

For example, the data collection range of the first data may include an identifier of a network slice. For example, the data collection range of the first data is network slice #1, that is, the first message is used to subscribe to first data related to network slice #1.

For example, the data collection range of the first data may include an identifier of an application. For example, the data collection range of the first data is App #1, that is, the first message is used to subscribe to first data related to App #1.

For example, the data collection range of the first data may include an area range. For example, the data collection range of the first data is cell #1 or tracking area (tracking area, TA) #1, that is, the first message is used to subscribe to first data in cell #1 or TA #1.

For example, the data collection range of the first data may include an identifier of a user. For example, the data collection range of the first data is user equipment (user equipment, UE) #1, that is, the first message is used to subscribe to first data related to UE #1. For another example, the data collection range of the first data is a group of UEs, that is, the first message is used to subscribe to first data of the group of UEs.

For example, the first message further includes a list of event subsets (list of event subsets). The list of event subsets indicates a type of data that needs to be collected in each event ID. For example, a data type of the first data is one or more of the fuplink/downlink traffic, an uplink/downlink data packet quantity, a connection quantity, an uplink/downlink retransmission quantity, a throughput rate, a delay, and a packet loss rate. That is, one event ID may correspond to one or more data types. For example, the event filter includes the list of event subsets.

For example, the first message further includes a plurality of data types associated with the first data, a plurality of reporting conditions, and a logical relationship between the plurality of reporting conditions. The plurality of data types are in one-to-one correspondence with the plurality of reporting conditions.

For example, the plurality of data types associated with the first data are the throughput rate, the delay, and the packet loss rate. A reporting criterion (denoted as criterion #1) corresponding to the throughput rate is less than 30 Mbps. A reporting criterion (denoted as criterion #2) corresponding to the delay is greater than 100 ms. A reporting criterion corresponding to the packet loss rate is greater than 0.01%. A logical relationship between the three criteria is criterion #1 and criterion #2 and criterion #3, that is, the first data is reported only when the three criteria are all met. Alternatively, a logical relationship between the three criteria is criterion #1 or criterion #2 or criterion #3, that is, the first data is reported when one of the three criteria is met.

For example, the first message further includes a reporting periodicity of the first data.

S302: The DCCF determines an SMF and a UPF based on the data collection range of the first data.

For example, the data collection range of the first data is cell #1, and the DCCF may determine the SMF and the UPF based on an identifier of cell #1. The step is an optional step. If the DCCF has obtained the corresponding SMF and UPF, the step may be skipped.

For the process, refer to conventional technologies. Details are not described herein again.

S303: The DCCF subscribes to the first data from the UPF based on the first message.

The following describes manners in which the DCCF subscribes to the first data from the UPF.

### Manner 1:

The DCCF subscribes to the first data from the UPF through the SMF.

For example, the DCCF sends an event exposure subscription (Nsmf_EventExposure_Subscribe) message to the SMF. The subscription message includes the data granularity of the first data, the data type of the first data, and identifier #A (where, for example, identifier #A is a third association identifier). For example, the subscription message further includes the data collection range of the first data, the plurality of data types associated with the first data, the plurality of reporting conditions, and logical relationship #1 between the plurality of reporting conditions.

For example, the SMF sends N4 message #1 to the UPF. N4 message #1 includes the data granularity of the first data, the data type of the first data, and identifier #A. For example, N4 message #1 further includes the data collection range of the first data, the plurality of data types associated with the first data, the plurality of reporting conditions, and logical relationship #1 between the plurality of reporting conditions. For example, N4 message #1 further includes the reporting periodicity of the first data.

### Manner 2:

The DCCF directly subscribes to the first data from the UPF.

For example, the DCCF sends a UPF event exposure subscription (Nupf_EventExposure_Subscribe) message (where, for example, the UPF event exposure subscription message is a third message) to the UPF. The subscription message includes the data granularity of the first data, the data type of the first data, and identifier #A. For example, the subscription message further includes the data collection range of the first data, the plurality of data types associated with the first data, the plurality of reporting conditions, and logical relationship #1 between the plurality of reporting conditions. For example, the subscription further includes the reporting periodicity of the first data.

After a subscription is successful, the DCCF stores a first relationship. The first relationship is a correspondence between identifier #1 and identifier #A.

S304: NWDAF#2 sends a second message to the DCCF. Correspondingly, the DCCF receives the second message.

The second message is used to subscribe to second data. The second message includes a data granularity of the second data, a data type of the second data, and identifier #2 (an example of a second association identifier). For example, the data granularity of the second data is greater than the data granularity of the first data.

For example, if the data granularity of the first data is at the QoS flow level, the data granularity of the second data may be at a network element level, an application level, or a user level.

For example, the data type of the second data is the throughput rate and/or the delay.

For example, the second message further includes a data collection range of the second data, a plurality of data types associated with the second data, a plurality of reporting conditions, and logical relationship #2 between the plurality of reporting conditions.

For example, the data collection range of the second data may include an identifier of a network slice, and/or an identifier of an application, and/or an area range, and/or an identifier of a user.

For example, the second message further includes a reporting periodicity of the second data.

S305: The DCCF determines whether the second data can be obtained from the first data.

For example, the first message is used to subscribe to QoS flow-level throughput rate data of UE #1. QoS flows related to UE #1 are QoS flow #1, QoS flow #2, and QoS flow #3. The second message is used to subscribe to UE-level throughput rate data of UE #1. In this case, the DCCF determines that the second data can be obtained from the first data.

For another example, the first message is used to subscribe to a QoS flow-level bandwidth of UE #1, and the second message is used to subscribe to a UE-level bandwidth of UE #2. In this case, the DCCF determines that the second data cannot be obtained from the first data.

For another example, the first message is used to subscribe to QoS flow-level throughput rate data of UE #1. QoS flows related to UE #1 are QoS flow #1, QoS flow #2, and QoS flow #3. The second message is used to subscribe to UE-level throughput rate data of UE #1 and UE #2. In this case, the DCCF determines that the UE-level throughput rate data of UE #1 in the second data can be obtained from the first data, and the UE-level throughput rate data of UE #2 in the second data cannot be obtained from the first data.

S306: The DCCF determines, based on a determining result, whether to subscribe to third data from the UPF. The third data includes all or a part of the second data.

The following further describes the method in this application with reference to the determining result.

### Case 1:

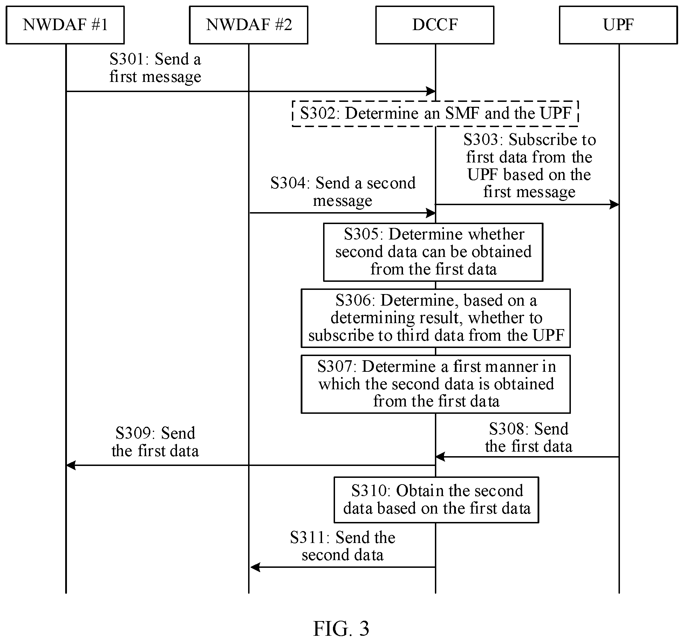

The determining result is that the second data can be obtained from the first data. In this case, as shown in FIG. 3, after S306, the method further includes S307 to S311.

S307: The DCCF determines a first manner in which the second data is obtained from the first data, and the DCCF skips subscribing to the second data from the UPF.

For example, the first manner may be calculating a maximum value, a minimum value, an average value, or a variance for the first data.

For example, the first message is used to subscribe to the QoS flow-level throughput rate data of UE #1. The QoS flows related to UE #1 are QoS flow #1, QoS flow #2, and QoS flow #3. The second message is used to subscribe to the UE-level throughput rate data of UE #1. In this case, the second data can be obtained from the first data. In a manner, UE flow - level throughput rate data of UE #1 = sum (throughput rate of QoS flow #1, throughput rate of QoS flow #2, throughput rate of QoS flow #3)

The DCCF stores a second relationship. The second relationship is a correspondence between identifier #2, identifier #A, and the first manner.

S308: The UPF sends the first data to the DCCF. Correspondingly, the DCCF receives the first data from the UPF.

The following describes manners in which the UPF sends the first data to the DCCF.

### Manner 1:

The UPF sends the first data to the DCCF through the SMF.

For example, the UPF sends N4 message #2 to the SMF. N4 message #2 includes the first data and identifier #A.

For example, the SMF sends an SMF event exposure notification (Nsmf_EventExposure_Notify) message to the DCCF. The notification message includes the first data and identifier #A.

### Manner 2:

The UPF directly sends the first data to the DCCF.

For example, the UPF sends a UPF event exposure notification (Nupf_EventExposure_Notify) notification message (where, for example, the UPF event exposure notification message is a first notification message) to the DCCF. The notification message includes the first data and identifier #A.

For example, if the UPF obtains the plurality of data types associated with the first data, the plurality of reporting conditions, and logical relationship #1 between the plurality of reporting conditions, the UPF sends the first data when logical relationship #1 is met.

S309: The DCCF sends the first data to NWDAF #1. Correspondingly, NWDAF #1 receives the first data.

Specifically, the DCCF may determine, based on the first relationship, that identifier #A in the notification message corresponds to identifier #1. Further, the DCCF sends the first data to NWDAF #1 based on identifier #1.

S310: The DCCF obtains the second data based on the first data.

Specifically, the DCCF may determine, based on the second relationship, that identifier #A in the notification message corresponds to identifier #2 and the first manner. Further, the DCCF obtains the second data based on the first manner and the first data.

As shown in S307, the first message is used to subscribe to the QoS flow-level throughput rate data of UE #1. The second message is used to subscribe to the UE-level throughput rate data of UE #1. The DCCF determines that UE flow - level throughput rate data of UE #1 = sum (throughput rate of QoS flow #1, throughput rate of QoS flow #2, throughput rate of QoS flow #3). In this case, in S310, the DCCF determines the UE-level throughput rate data of UE#1 according to the formula.

S311: The DCCF sends the second data to NWDAF #2. Correspondingly, NWDAF #2 receives the second data.

Specifically, the DCCF may send the second data to NWDAF #2 based on identifier #2.

It should be understood that S309 and S311 may be performed simultaneously, or S309 may be performed after S311. This is not limited.

### Case 2:

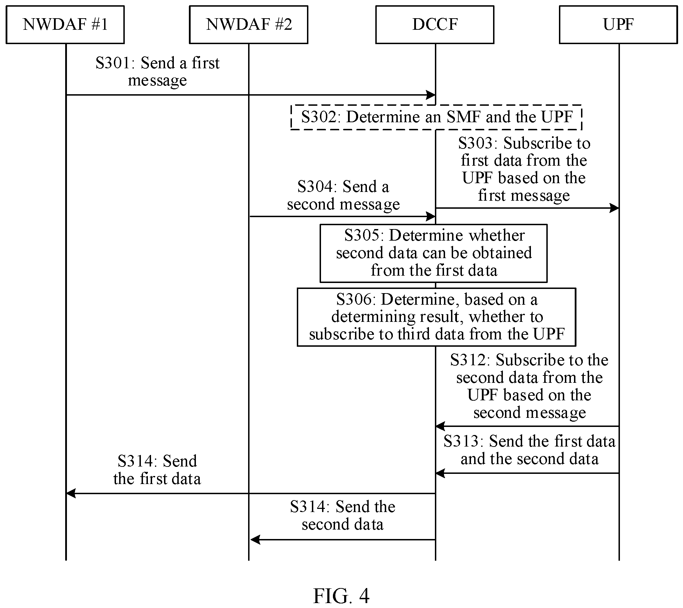

The determining result is that the second data cannot be obtained from the first data. In this case, as shown in FIG. 4, after S306, the method further includes the following steps.

S312: The DCCF subscribes to the second data from the UPF based on the second message.

For example, the first message is used to subscribe to the QoS flow-level bandwidth of UE #1, and the second message is used to subscribe to the UE-level bandwidth of UE #2. In this case, the second data cannot be obtained from the first data.

The following describes manners in which the DCCF subscribes to the second data from the UPF.

### Manner 1:

The DCCF subscribes to the second data from the UPF through the SMF.

For example, the DCCF sends an SMF event exposure subscription (Nsmf_EventExposure_Subscribe) message to the SMF. The subscription message includes the data granularity of the second data, the data type of the second data, and identifier #B (where, for example, identifier #B is a fourth association identifier). For example, the subscription message further includes the data collection range of the second data, the plurality of data types associated with the second data, the plurality of reporting conditions, and logical relationship #2 between the plurality of reporting conditions. For example, the subscription message further includes the reporting periodicity of the second data.

For example, the SMF sends N4 message #1 to the UPF. N4 message #1 includes the data granularity of the second data, the data type of the second data, and identifier #B. For example, N4 message #1 further includes the data collection range of the second data, the plurality of data types associated with the second data, the plurality of reporting conditions, and logical relationship #2 between the plurality of reporting conditions. For example, N4 message #1 further includes the reporting periodicity of the second data.

### Manner 2:

The DCCF directly subscribes to the second data from the UPF.

For example, the DCCF sends a UPF event exposure subscription (Nupf_EventExposure_Subscribe) message to the UPF. The subscription message includes the data granularity of the second data, the data type of the second data, and identifier #B. For example, the subscription message further includes the data collection range of the second data, the plurality of data types associated with the second data, the plurality of reporting conditions, and logical relationship #2 between the plurality of reporting conditions. For example, the subscription message further includes the reporting periodicity of the second data.

After a subscription is successful, the DCCF stores a third relationship. The third relationship is a correspondence between identifier #2 and identifier #B.

S313: The UPF sends the first data and the second data to the DCCF. Correspondingly, the DCCF receives the first data and the second data from the UPF.

It should be understood that the UPF may send the first data and the second data simultaneously, or may separately send the first data and the second data. This is not limited.

The following describes manners in which the UPF sends the first data and the second data to the DCCF.

### Manner 1:

The UPF sends the first data and the second data to the DCCF through the SMF.

For example, the UPF sends N4 message #2 to the SMF. N4 message #2 includes the first data and identifier #A, and the second data and identifier #B.

For example, the SMF sends an SMF event exposure notification (Nsmf_EventExposure_Notify) message to the DCCF. The notification message includes the first data and identifier #A, and the second data and identifier #B.

### Manner 2:

The UPF directly sends the first data and the second data to the DCCF.

For example, the UPF sends a UPF event exposure notification (Nupf_EventExposure_Notify) message to the DCCF. The notification message includes the first data and identifier #A, and the second data and identifier #B.

For example, if the UPF obtains the plurality of data types associated with the first data, the plurality of reporting conditions, and logical relationship #1 between the plurality of reporting conditions, the UPF sends the first data when logical relationship #1 is met.

For example, if the UPF obtains the plurality of data types associated with the second data, the plurality of reporting conditions, and logical relationship #2 between the plurality of reporting conditions, the UPF sends the second data when logical relationship #2 is met.

S314: The DCCF sends the first data to NWDAF #1, and sends the second data to NWDAF #2.

Specifically, the DCCF may determine, based on the first relationship, that identifier #A in the notification message corresponds to identifier #1, and send the first data to NWDAF #1 based on identifier #1. The DCCF determines, based on the third relationship, that identifier #B in the notification message corresponds to identifier #2, and send the second data to NWDAF #2 based on identifier #2.

### Case 3:

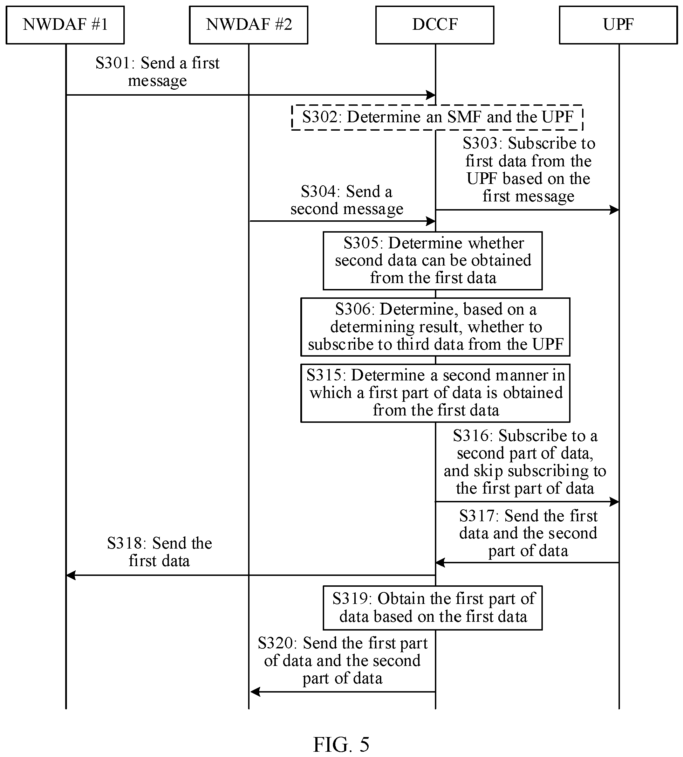

The second data includes a first part of data and a second part of data. The determining result is that the first part of data can be obtained from the first data, but the second part of data cannot be obtained from the first data. In this case, as shown in FIG. 5, after S306, the method further includes the following steps.

S315: The DCCF determines a second manner in which the first part of data is obtained from the first data.

For example, the second manner may be calculating a maximum value, a minimum value, an average value, or a variance for the first data.

For example, the first message is used to subscribe to the QoS flow-level throughput rate data of UE #1. The QoS flows related to UE #1 are QoS flow #1, QoS flow #2, and QoS flow #3. The second message is used to subscribe to the UE-level throughput rate data of UE #1 and UE #2. In this case, the UE-level throughput rate data of UE #1 in the second data can be obtained from the first data. In a manner, the UE-level throughput rate data of UE #1 may be calculated according to the following formula: UE flow - level throughput rate data of UE #1 = sum (throughput rate of QoS flow #1, throughput rate of QoS flow #2, throughput rate of QoS flow #3)

S316: The DCCF subscribes to the second part of data from the UPF, and skips subscribing to the first part of data from the UPF.

The following describes manners in which the DCCF subscribes to the second part of data from the UPF.

### Manner 1:

The DCCF subscribes to the second part of data from the UPF through the SMF.

For example, the DCCF sends an SMF event exposure subscription (Nsmf_EventExposure_Subscribe) message to the SMF. The subscription message includes a data granularity of the second part of data, a data type of the second part of data, and identifier #B. For example, the subscription message further includes a data collection range of the second part of data, a plurality of data types associated with the second part of data, a plurality of reporting conditions, and logical relationship #3 between the plurality of reporting conditions. For example, the subscription message further includes a reporting periodicity of the second part of data.

For example, the SMF sends N4 message #1 to the UPF. N4 message #1 includes the data granularity of the second part of data, the data type of the second part of data, and identifier #B. For example, N4 message # 1 further includes the data collection range of the second part of data, the plurality of data types associated with the second part of data, the plurality of reporting conditions, and logical relationship #3 between the plurality of reporting conditions. For example, N4 message #1 further includes the reporting periodicity of the second part of data.

### Manner 2:

The DCCF directly subscribes to the second part of data from the UPF.

For example, the DCCF sends a UPF event exposure subscription (Nupf_EventExposure_Subscribe) message to the UPF. The subscription message includes a data granularity of the second part of data, a data type of the second part of data, and identifier #B. For example, the subscription message further includes a data collection range of the second part of data, a plurality of data types associated with the second part of data, a plurality of reporting conditions, and logical relationship #3 between the plurality of reporting conditions. For example, the subscription message further includes a reporting periodicity of the second part of data.

After a subscription is successful, the DCCF stores a third relationship and a fourth relationship. The third relationship is a correspondence between identifier #2 and identifier #B, and the fourth relationship is a correspondence between identifier #2, identifier #A, and the second manner.

S317: The UPF sends the first data and the second part of data to the DCCF. Correspondingly, the DCCF receives the first data and the second part of data from the UPF.

It should be understood that the UPF may simultaneously send the first data and the second part of data, or may separately send the first data and the second part of data. This is not limited.

The following describes manners in which the UPF sends the first data and the second part of data to the DCCF.

### Manner 1:

The UPF sends the first data and the second part of data to the DCCF through the SMF.

For example, the UPF sends N4 message #2 to the SMF. N4 message #2 includes the first data and identifier #A, and the second part of data and identifier #B.

For example, the SMF sends an SMF event exposure notification (Nsmf_EventExposure_Notify) message to the DCCF. The notification message includes the first data and identifier #A, and the second part of data and identifier #B.

### Manner 2:

The UPF directly sends the first data and the second part of data to the DCCF.

For example, the UPF sends a UPF event exposure notification (Nupf_EventExposure_Notify) message to the DCCF. The notification message includes the first data and identifier #A, and the second part of data and identifier #B.

For example, if the UPF obtains the plurality of data types associated with the first data, the plurality of reporting conditions, and logical relationship #1 between the plurality of reporting conditions, the UPF sends the first data when logical relationship #1 is met.

For example, if the UPF obtains the plurality of data types associated with the second part of data, the plurality of reporting conditions, and logical relationship #3 between the plurality of reporting conditions, the UPF sends the second part of data when logical relationship #3 is met.

S318: The DCCF sends the first data to NWDAF #1. Correspondingly, NWDAF #1 receives the first data.

Specifically, the DCCF may determine, based on the first relationship, that identifier #A in the notification message corresponds to identifier #1. Further, the DCCF sends the first data to NWDAF #1 based on identifier #1.

S319: The DCCF obtains the first part of data based on the first data.

Specifically, the DCCF may determine, based on the fourth relationship, that identifier #A in the notification message corresponds to identifier #2 and the second manner. Further, the DCCF obtains the first part of data based on the second manner and the first data.

S320: The DCCF sends the first part of data and the second part of data to NWDAF #2. Correspondingly, NWDAF #2 receives the first part of data and the second part of data.

It should be understood that the second data includes the first part of data and the second part of data.

Specifically, the DCCF may determine, based on the third relationship, that identifier #B in the notification message corresponds to identifier #2. Further, the DCCF sends the first part of data and the second part of data to NWDAF #2 based on identifier #2.

In the solution of Embodiment 1, the UPF sends collected data to the DCCF, and the DCCF performs further processing. In another solution, for details, refer to Embodiment 2 below. The UPF may send the collected data to an MFAF, and the MFAF performs further processing.

### Embodiment 2

S401: NWDAF #1 sends a first message to a DCCF. Correspondingly, the DCCF receives the first message.

The first message is used to subscribe to first data. The first message includes a data granularity of the first data, a data type of the first data, and identifier #1. For example, the first message further includes a data collection range of the first data, a plurality of data types associated with the first data, a plurality of reporting conditions, and logical relationship #1 between the plurality of reporting conditions.

The process is the same as S301, and details are not described herein again.

S402: The DCCF determines an SMF and a UPF based on the data collection range of the first data.

The step is an optional step. If the DCCF has obtained the corresponding SMF and UPF, the step may be skipped.

S403: The DCCF subscribes to the first data from the UPF based on the first message.

The process is similar to S303. A difference is that: When the DCCF subscribes to the first data from the UPF, the DCCF further sends an identifier of an MFAF to the UPF. For example, the identifier of the MFAF may be an address of the MFAF.

After a subscription is successful, the DCCF stores a first relationship. The first relationship is a correspondence between identifier #1 and identifier #A.

S404: The DCCF sends the first relationship to the MFAF. Correspondingly, the MFAF receives the first relationship.

For example, the DCCF may send the first relationship to the MFAF through a data management configuration (Nmfaf_3daDataManagement_Configure) service operation.

It should be understood that the DCCF sends the first relationship to the MFAF, so that subsequently the MFAF receives collected data from the UPF, and then determines, based on the first relationship, an NWDAF to which the data collected from the UPF is to be sent. For details, refer to the following descriptions.

S405: NWDAF #2 sends a second message to the DCCF. Correspondingly, the DCCF receives the second message.

The second message is used to subscribe to second data. The second message includes a data granularity of the second data, a data type of the second data, and identifier #2. For example, the second message further includes a data collection range of the second data. For example, the data granularity of the second data is greater than the data granularity of the first data. For example, the second message further includes a plurality of data types associated with the second data, a plurality of reporting conditions, and logical relationship #2 between the plurality of reporting conditions.

The process is the same as S304, and details are not described herein again.

S406: The DCCF determines whether the second data can be obtained from the first data.

S407: The DCCF determines, based on a determining result, whether to subscribe to third data from the UPF. The third data includes all or a part of the second data.

The following further describes the method in this application with reference to the determining result.

### Case 1:

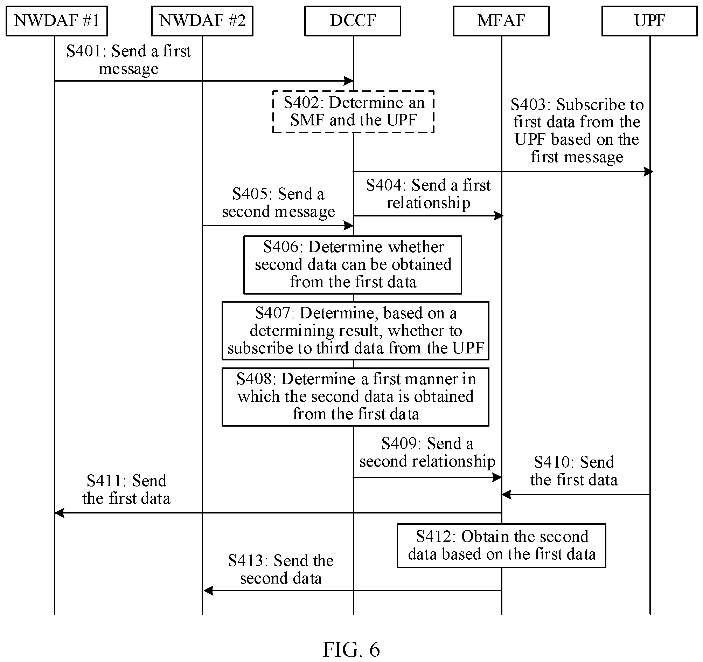

The determining result is that the second data can be obtained from the first data. In this case, as shown in FIG. 6, after S407, the method further includes the following steps.

S408: The DCCF determines a first manner in which the second data is obtained from the first data, and the DCCF skips subscribing to the second data from the UPF.

S409: The DCCF sends a second relationship to the MFAF. Correspondingly, the MFAF receives the second relationship.

The second relationship is a correspondence between identifier #2, identifier #A, and the first manner.

It should be understood that the DCCF sends the second relationship to the MFAF, so that subsequently the MFAF receives collected data from the UPF, and then obtains and sends the second data based on the second relationship. For details, refer to the following descriptions.

S410: The UPF sends the first data to the MFAF. Correspondingly, the MFAF receives the first data from the UPF.

The following describes manners in which the UPF sends the first data to the MFAF.

### Manner 1:

The UPF sends the first data to the MFAF through the SMF.

For example, the UPF sends N4 message #2 to the SMF. N4 message #2 includes the first data and identifier #A.

For example, the SMF sends a notification message to the MFAF. The notification message includes the first data and identifier #A.

### Manner 2:

The UPF directly sends the first data to the MFAF.

For example, the UPF directly sends a notification message to the MFAF. The notification message includes the first data and identifier #A.

For example, if the UPF obtains the plurality of data types associated with the first data, the plurality of reporting conditions, and logical relationship #1 between the plurality of reporting conditions, the UPF sends the first data when logical relationship #1 is met.

S411: The MFAF sends the first data to NWDAF #1. Correspondingly, NWDAF #1 receives the first data.

Specifically, the MFAF may determine, based on the first relationship, that identifier #A in the notification message corresponds to identifier #1. Further, the MFAF sends the first data to NWDAF #1 based on identifier #1.

S412: The MFAF obtains the second data based on the first data.

Specifically, the MFAF may determine, based on the second relationship, that identifier #A in the notification message corresponds to identifier #2 and the first manner. Further, the MFAF obtains the second data based on the first manner and the first data.

S413: The MFAF sends the second data to NWDAF #2. Correspondingly, NWDAF #2 receives the second data.

Specifically, the MFAF may send the second data to NWDAF #2 based on identifier #2.

It should be understood that S411 and S413 may be performed simultaneously, or S411 may be performed after S413. This is not limited.

### Case 2:

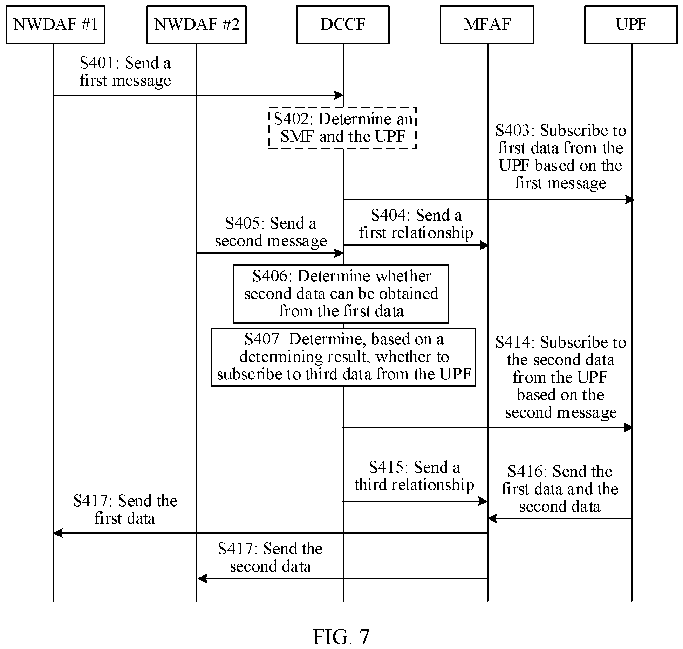

The determining result is that the second data cannot be obtained from the first data. In this case, as shown in FIG. 7, after S407, the method further includes the following steps.

S414: The DCCF subscribes to the second data from the UPF based on the second message.

The process is similar to S312. A difference is that: When the DCCF subscribes to the second data from the UPF, the DCCF further sends the identifier of the MFAF to the UPF.

After a subscription is successful, the DCCF stores a third relationship. The third relationship is a correspondence between identifier #2 and identifier #B.

S415: The DCCF sends the third relationship to the MFAF. Correspondingly, the MFAF receives the third relationship.

For example, the DCCF may send an MFAF data management configuration (Nmfaf_3daDataManagement_Configure) message to the MFAF. The configuration message includes the third relationship.

It should be understood that the DCCF sends the third relationship to the MFAF, so that subsequently the MFAF receives collected data from the UPF, and then determines, based on the third relationship, an NWDAF to which the data collected from the UPF is to be sent. For details, refer to the following descriptions.

S416: The UPF sends the first data and the second data to the MFAF. Correspondingly, the MFAF receives the first data and the second data from the UPF.

It should be understood that the UPF may send the first data and the second data simultaneously, or may separately send the first data and the second data. This is not limited.

The following describes manners in which the UPF sends the first data and the second data to the MFAF.

### Manner 1:

The UPF sends the first data and the second data to the MFAF through the SMF.

For example, the UPF sends N4 message #2 to the SMF. N4 message #2 includes the first data and identifier #A, and the second data and identifier #B.

For example, the SMF sends a notification message to the MFAF. The notification message includes the first data and identifier #A, and the second data and identifier #B.

### Manner 2:

The UPF directly sends the first data and the second data to the MFAF.

For example, the UPF directly sends a notification message to the MFAF. The notification message includes the first data and identifier #A, and the second data and identifier #B.

For example, if the UPF obtains the plurality of data types associated with the first data, the plurality of reporting conditions, and logical relationship #1 between the plurality of reporting conditions, the UPF sends the first data when logical relationship #1 is met.

For example, if the UPF obtains the plurality of data types associated with the second data, the plurality of reporting conditions, and logical relationship #2 between the plurality of reporting conditions, the UPF sends the second data when logical relationship #2 is met.

S417: The MFAF sends the first data to NWDAF #1, and sends the second data to NWDAF #2.

Specifically, the MFAF may determine, based on the first relationship, that identifier #A in the notification message corresponds to identifier #1, and send the first data to NWDAF #1 based on identifier #1. The MFAF determines, based on the third relationship, that identifier #B in the notification message corresponds to identifier #2, and send the second data to NWDAF #2 based on identifier #2.

### Case 3

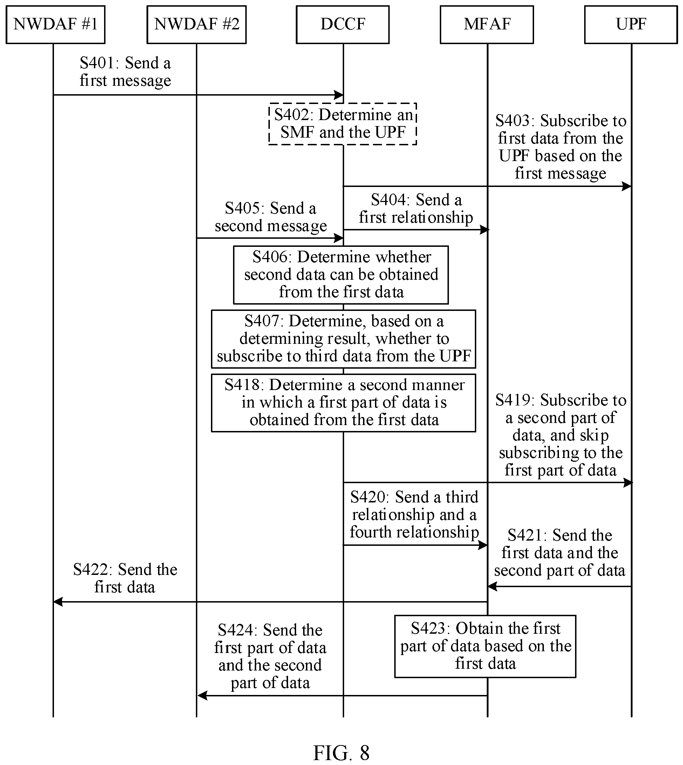

The second data includes a first part of data and a second part of data. The determining result is that the first part of data can be obtained from the first data, but the second part of data cannot be obtained from the first data. In this case, as shown in FIG. 8, after S407, the method further includes the following steps.

S418: The DCCF determines a second manner in which the first part of data is obtained from the first data.

S419: The DCCF subscribes to the second part of data from the UPF, and skips subscribing to the first part of data from the UPF.

The process is similar to S316. A difference is that: When the DCCF subscribes to the second part of data from the UPF, the DCCF further sends the identifier of the MFAF to the UPF.

After a subscription is successful, the DCCF stores a third relationship and a fourth relationship. The third relationship is a correspondence between identifier #2 and identifier #B, and the fourth relationship is a correspondence between identifier #2, identifier #A, and the second manner.

S420: The DCCF sends the third relationship and the fourth relationship to the MFAF. Correspondingly, the MFAF receives the third relationship and the fourth relationship.

It should be understood that the DCCF sends the third relationship and the fourth relationship to the MFAF, so that subsequently the MFAF receives collected data from the UPF, then determines, based on the third relationship, an NWDAF to which the data collected from the UPF is to be sent, and obtains and sends the first part of data based on the fourth relationship. For details, refer to the following descriptions.

S421: The UPF sends the first data and the second part of data to the MFAF. Correspondingly, the MFAF receives the first data and the second part of data from the UPF.

It should be understood that the UPF may simultaneously send the first data and the second part of data, or may separately send the first data and the second part of data. This is not limited.

The following describes manners in which the UPF sends the first data and the second part of data to the MFAF.

### Manner 1:

The UPF sends the first data and the second part of data to the MFAF through the SMF.

For example, the UPF sends N4 message #2 to the SMF. N4 message #2 includes the first data and identifier #A, and the second part of data and identifier #B.

For example, the SMF sends a notification message to the MFAF. The notification message includes the first data and identifier #A, and the second part of data and identifier #B.

### Manner 2:

The UPF directly sends the first data and the second part of data to the MFAF.

For example, the UPF directly sends a notification message to the MFAF. The notification message includes the first data and identifier #A, and the second part of data and identifier #B.

For example, if the UPF obtains the plurality of data types associated with the first data, the plurality of reporting conditions, and logical relationship #1 between the plurality of reporting conditions, the UPF sends the first data when logical relationship #1 is met.

For example, if the UPF obtains a plurality of data types associated with the second part of data, a plurality of reporting conditions, and logical relationship #3 between the plurality of reporting conditions, the UPF sends the second part of data when logical relationship #3 is met.

S422: The MFAF sends the first data to NWDAF #1. Correspondingly, NWDAF #1 receives the first data.

Specifically, the MFAF may determine, based on the first relationship, that identifier #A in the notification message corresponds to identifier #1. Further, the MFAF sends the first data to NWDAF #1 based on identifier #1.

S423: The MFAF obtains the first part of data based on the first data.

Specifically, the MFAF may determine, based on the fourth relationship, that identifier #A in the notification message corresponds to identifier #2 and the second manner. Further, the MFAF obtains the first part of data based on the second manner and the first data.

S424: The MFAF sends the first part of data and the second part of data to NWDAF #2. Correspondingly, NWDAF #2 receives the first part of data and the second part of data.

It should be understood that the second data includes the first part of data and the second part of data.

Specifically, the MFAF may determine, based on the third relationship, that identifier #B in the notification message corresponds to identifier #2. Further, the MFAF sends the first part of data and the second part of data to NWDAF #2 based on identifier #2.

In Embodiment 1 and Embodiment 2, the DCCF first subscribes to the first data from the UPF, subsequently determines whether the second data can be obtained based on the first data, and then performs further processing based on the determining result. In another manner, for details, refer to Embodiment 3 and Embodiment 4 below. The DCCF may first subscribe to the second data from the UPF, subsequently determine whether the second data can be obtained based on the first data, and then perform further processing based on the determining result.

### Embodiment 3

S501: NWDAF #2 sends a second message to a DCCF. Correspondingly, the DCCF receives the second message.

The second message is used to subscribe to second data. The second message includes a data granularity of the second data, a data type of the second data, and identifier #2. For example, the second message further includes a data collection range of the second data, a plurality of data types associated with the second data, a plurality of reporting conditions, and logical relationship #2 between the plurality of reporting conditions.

S502: The DCCF determines an SMF and a UPF based on the data collection range of the second data.

The step is an optional step. If the DCCF has obtained the corresponding SMF and UPF, the step may be skipped.

S503: The DCCF subscribes to the second data from the UPF based on the second message.

A manner in which the DCCF subscribes to the second data from the UPF is the same as that in S312, and details are not described herein again.

S504: NWDAF #1 sends a first message to the DCCF. Correspondingly, the DCCF receives the first message.

The first message is used to subscribe to first data. The first message includes a data granularity of the first data, a data type of the first data, and identifier #1. For example, the first message further includes a data collection range of the first data, a plurality of data types associated with the first data, a plurality of reporting conditions, and logical relationship #1 between the plurality of reporting conditions.

For example, the data granularity of the first data is less than the data granularity of the second data.

S505: The DCCF determines whether the second data can be obtained from the first data.

S506: The DCCF determines, based on a determining result, whether to subscribe to third data from the UPF. The third data includes all or a part of the second data.

The following further describes the method in this application with reference to the determining result.

### Case A:

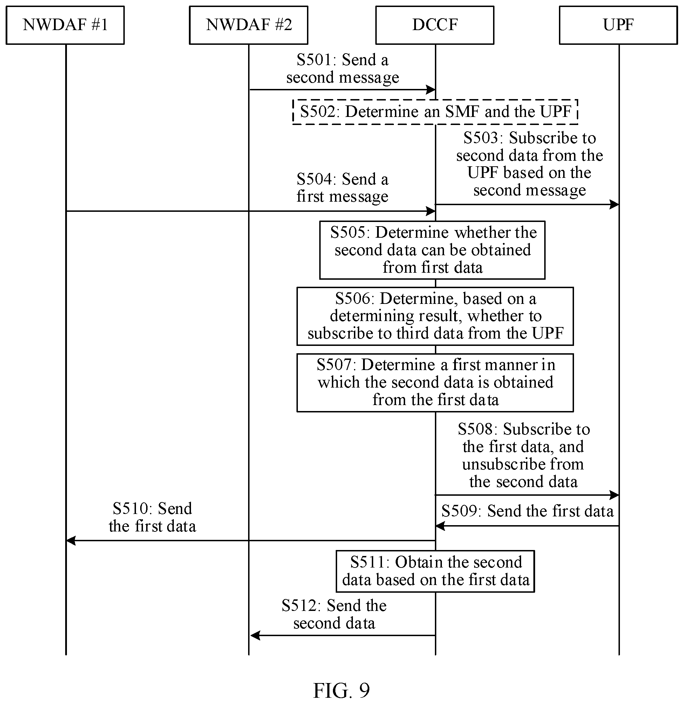

The determining result is that the second data can be obtained from the first data. In this case, as shown in FIG. 9, after S506, the method further includes the following steps.

S507: The DCCF determines a first manner in which the second data is obtained from the first data.

S508: The DCCF subscribes to the first data from the UPF, and unsubscribes from the second data from the UPF.

A manner in which the DCCF subscribes to the first data from the UPF is the same as that in S303, and details are not described herein again.

In a manner, the DCCF may unsubscribe from the second data from the UPF while subscribing to the first data from the UPF.

For example, the DCCF directly sends a subscription message to the UPF. The subscription message includes the data granularity of the first data, the data type of the first data, identifier #A, and information #A. For example, the subscription message further includes the data collection range of the first data, the plurality of data types associated with the first data, the plurality of reporting conditions, and logical relationship #1 between the plurality of reporting conditions. The information #A is used to unsubscribe from the second data from the UPF.

In another implementation, the DCCF may first unsubscribe from the second data from the UPF, and then subscribe to the first data from the UPF.

In another manner, the DCCF may first subscribe to the first data from the UPF, and then unsubscribe from the second data from the UPF.

S509: The UPF sends the first data to the DCCF. Correspondingly, the DCCF receives the first data from the UPF.

The process is the same as S308, and details are not described herein again.

S510: The DCCF sends the first data to NWDAF #1. Correspondingly, NWDAF #1 receives the first data.

The process is the same as S309, and details are not described herein again.

S511: The DCCF obtains the second data based on the first data.

The process is the same as S310, and details are not described herein again.

S512: The DCCF sends the second data to NWDAF #2. Correspondingly, NWDAF #2 receives the second data.

The process is the same as S311, and details are not described herein again.

### Case B:

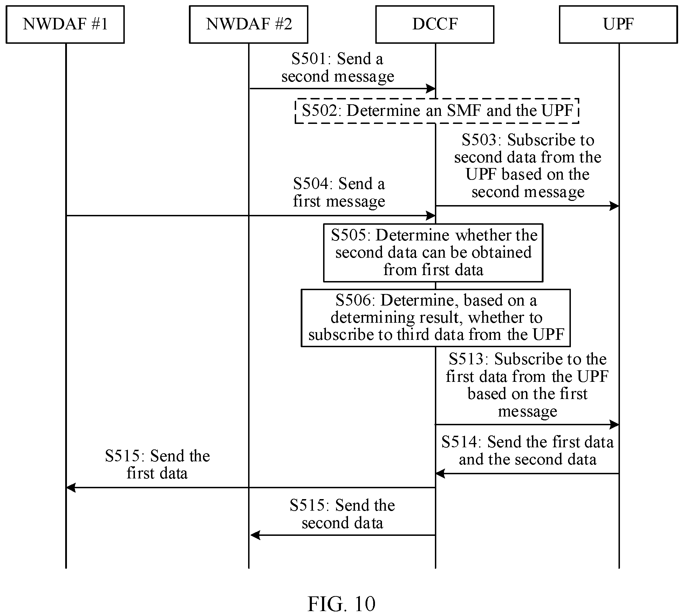

The determining result is that the second data cannot be obtained from the first data. In this case, as shown in FIG. 10, after S506, the method further includes the following steps.

S513: The DCCF subscribes to the first data from the UPF based on the first message.

The process is the same as S303, and details are not described herein again.

S514: The UPF sends the first data and the second data to the DCCF. Correspondingly, the DCCF receives the first data and the second data from the UPF.

The process is the same as S313, and details are not described herein again.

S515: The DCCF sends the first data to NWDAF #1, and sends the second data to NWDAF #2.

The process is the same as S314, and details are not described herein again.

### Case C:

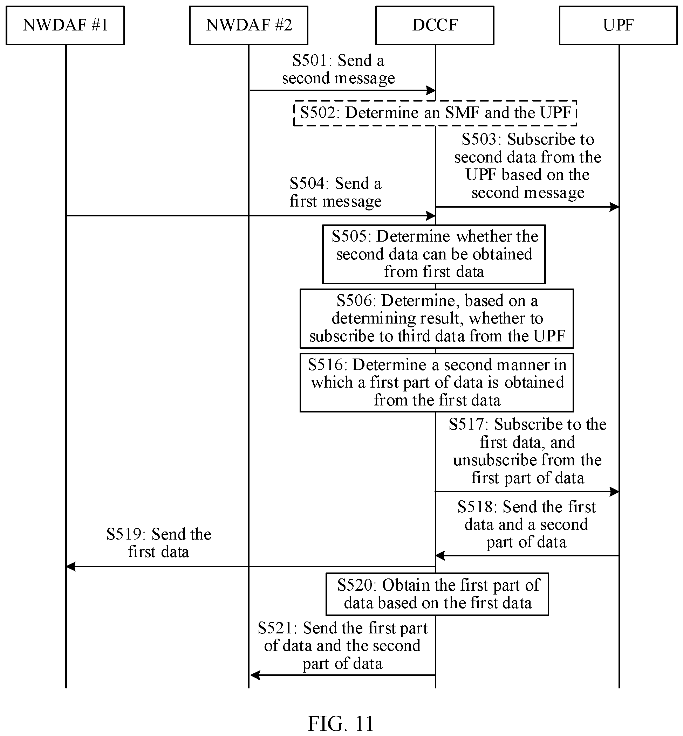

The second data includes a first part of data and a second part of data. The determining result is that the first part of data can be obtained from the first data, but the second part of data cannot be obtained from the first data. In this case, as shown in FIG. 11, after S506, the method further includes the following steps.

S516: The DCCF determines a second manner in which the first part of data is obtained from the first data.

The process is the same as S315, and details are not described herein again.

S517: The DCCF subscribes to the first data from the UPF, and unsubscribes from the first part of data from the UPF.

A manner in which the DCCF subscribes to the first data from the UPF is the same as that in S303, and details are not described herein again.

In a manner, the DCCF may unsubscribe from the first part of data from the UPF while subscribing to the first data from the UPF.

For example, the DCCF directly sends a subscription message to the UPF. The subscription message includes the data granularity of the first data, the data type of the first data, identifier #A, and information #B. For example, the subscription message further includes the data collection range of the first data, the plurality of data types associated with the first data, the plurality of reporting conditions, and logical relationship #1 between the plurality of reporting conditions. Information #B is used to unsubscribe from the first part of data from the UPF.

In another manner, the DCCF may first unsubscribe from the first part of data from the UPF, and then subscribe to the first data from the UPF.

In another manner, the DCCF may first subscribe to the first data from the UPF, and then unsubscribe from the first part of data from the UPF.

The DCCF stores a first relationship and a fourth relationship. The first relationship is a correspondence between identifier # 1 and identifier #A, and the fourth relationship is a correspondence between identifier #2, identifier #A, and the second manner.

S518: The UPF sends the first data and the second part of data to the DCCF. Correspondingly, the DCCF receives the first data and the second part of data from the UPF.

The process is the same as S317, and details are not described herein again.

S519: The DCCF sends the first data to NWDAF #1. Correspondingly, NWDAF #1 receives the first data.

The process is the same as S318, and details are not described herein again.

S520: The DCCF obtains the first part of data based on the first data.

The process is the same as S319, and details are not described herein again.

S521: The DCCF sends the first part of data and the second part of data to NWDAF #2. Correspondingly, NWDAF #2 receives the first part of data and the second part of data.

It should be understood that the second data includes the first part of data and the second part of data.

The process is the same as S320, and details are not described herein again.

### Embodiment 4

S601: NWDAF #2 sends a second message to a DCCF. Correspondingly, the DCCF receives the second message.

The second message is used to subscribe to second data. The second message includes a data granularity of the second data, a data type of the second data, and identifier #2. For example, the second message further includes a data collection range of the second data, a plurality of data types associated with the second data, a plurality of reporting conditions, and logical relationship #2 between the plurality of reporting conditions.

The process is the same as S501, and details are not described herein again.

S602: The DCCF determines an SMF and a UPF based on the data collection range of the second data.

The step is an optional step. If the DCCF has obtained the corresponding SMF and UPF, the step may be skipped.

S603: The DCCF subscribes to the second data from the UPF based on the second message.

When the DCCF subscribes to the second data from the UPF, the DCCF further sends an identifier of an MFAF to the UPF. For a specific process, refer to S414. Details are not described herein again.

After a subscription is successful, the DCCF stores a third relationship. The third relationship is a correspondence between identifier 2 and identifier #B.

S604: The DCCF sends the third relationship to the MFAF. Correspondingly, the MFAF receives the third relationship.

For example, the DCCF may send the third relationship to the MFAF through an Nmfaf_3daDataManagement_Configure service operation.

S605: NWDAF #1 sends a first message to the DCCF. Correspondingly, the DCCF receives the first message.

The first message is used to subscribe to first data. The first message includes a data granularity of the first data, a data type of the first data, and identifier #1. For example, the first message further includes a data collection range of the first data, a plurality of data types associated with the first data, a plurality of reporting conditions, and logical relationship #1 between the plurality of reporting conditions.

For example, the data granularity of the first data is less than the data granularity of the second data.

S606: The DCCF determines whether the second data can be obtained from the first data.

S607: The DCCF determines, based on a determining result, whether to subscribe to third data from the UPF. The third data includes all or a part of the second data.

The following further describes the method in this application with reference to the determining result.

### Case a:

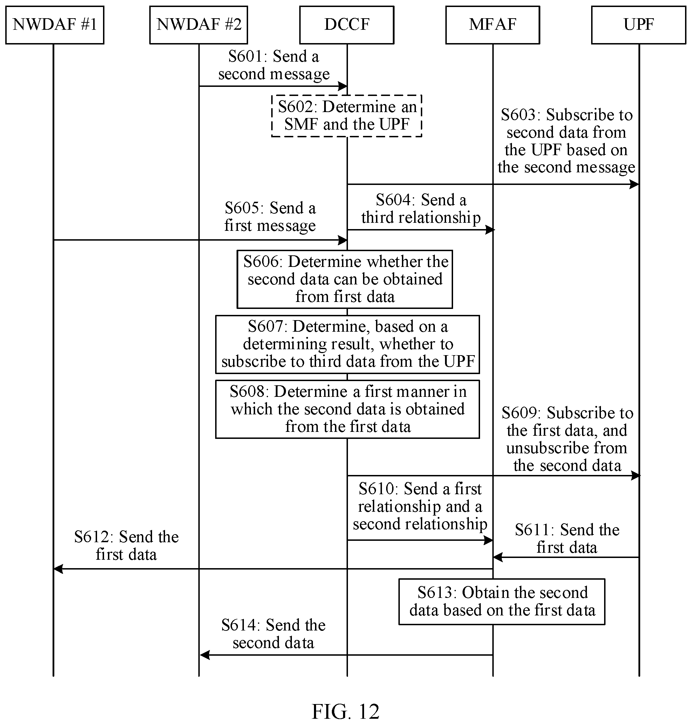

The determining result is that the second data can be obtained from the first data. In this case, as shown in FIG. 12, after S607, the method further includes the following steps.

S608: The DCCF determines a first manner in which the second data is obtained from the first data.

S609: The DCCF subscribes to the first data from the UPF, and unsubscribes from the second data from the UPF.

When the DCCF subscribes to the first data from the UPF, the DCCF further sends the identifier of the MFAF to the UPF. For a specific process, refer to S403.

In a manner, the DCCF may unsubscribe from the second data from the UPF while subscribing to the first data from the UPF.

In another manner, the DCCF may first unsubscribe from the second data from the UPF, and then subscribe to the first data from the UPF.

In another manner, the DCCF may first subscribe to the first data from the UPF, and then unsubscribe from the second data from the UPF.

After a subscription is successful, the DCCF stores a first relationship and a second relationship. The first relationship is a correspondence between identifier #1 and identifier #A. The second relationship is a correspondence between identifier #2, identifier #A, and the first manner.

S610: The DCCF sends the first relationship and the second relationship to the MFAF.

S611: The UPF sends the first data to the MFAF. Correspondingly, the MFAF receives the first data from the UPF.

The process is the same as S410, and details are not described herein again.

S612: The MFAF sends the first data to NWDAF #1. Correspondingly, NWDAF #1 receives the first data.

The process is the same as S411, and details are not described herein again.

S613: The MFAF obtains the second data based on the first data.

The process is the same as S412, and details are not described herein again.

S614: The MFAF sends the second data to NWDAF #2. Correspondingly, NWDAF #2 receives the second data.

The process is the same as S413, and details are not described herein again.

It should be understood that S612 and S614 may be performed simultaneously, or S612 may be performed after S614. This is not limited.

### Case b:

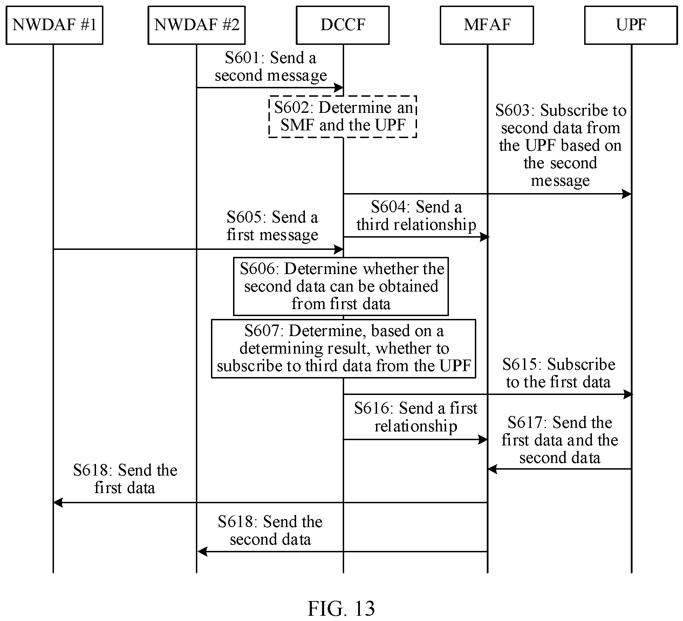

The determining result is that the second data cannot be obtained from the first data. In this case, as shown in FIG. 13, after S607, the method further includes the following steps.

S615: The DCCF subscribes to the first data from the UPF based on the first message.

When the DCCF subscribes to the first data from the UPF, the DCCF further sends the identifier of the MFAF to the UPF. For a specific process, refer to S403.

After a subscription is successful, the DCCF stores a first relationship. The first relationship is a correspondence between identifier #1 and identifier #A.

S616: The DCCF sends the first relationship to the MFAF. Correspondingly, the MFAF receives the first relationship.

S617: The UPF sends the first data and the second data to the MFAF. Correspondingly, the MFAF receives the first data and the second data from the UPF.

The process is the same as S416, and details are not described herein again.

S618: The MFAF sends the first data to NWDAF #1, and sends the second data to NWDAF #2.

The process is the same as S417, and details are not described herein again.

### Case c:

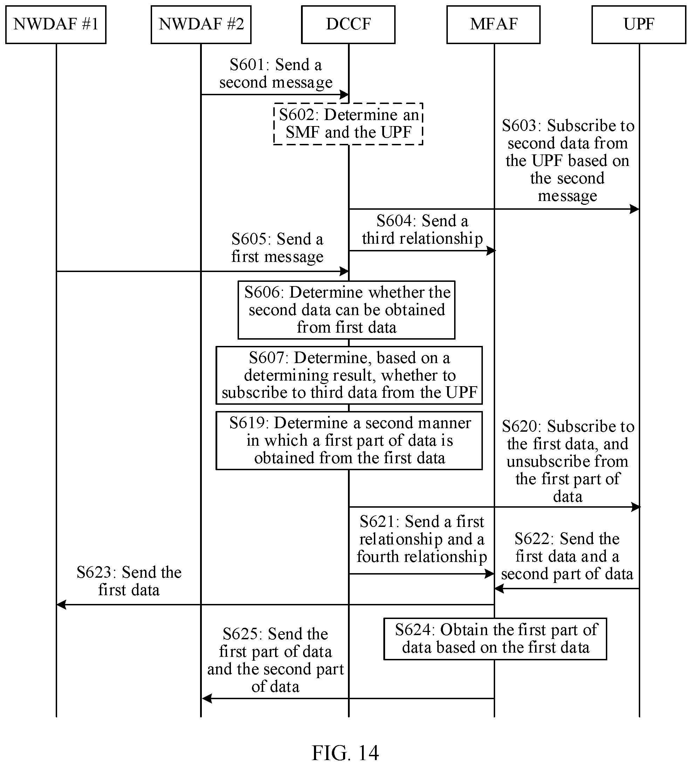

The second data includes a first part of data and a second part of data. The determining result is that the first part of data can be obtained from the first data, but the second part of data cannot be obtained from the first data. In this case, as shown in FIG. 14, after S607, the method further includes the following steps.

S619: The DCCF determines a second manner in which the first part of data is obtained from the first data.

S620: The DCCF subscribes to the first data from the UPF, and unsubscribes from the first part of data from the UPF.

When the DCCF subscribes to the first data from the UPF, the DCCF further sends the identifier of the MFAF to the UPF. For a specific process, refer to S403. Details are not described herein again.

In a manner, the DCCF may unsubscribe from the first part of data from the UPF while subscribing to the first data from the UPF.

In another manner, the DCCF may first unsubscribe from the first part of data from the UPF, and then subscribe to the first data from the UPF.

In another manner, the DCCF may first subscribe to the first data from the UPF, and then unsubscribe from the first part of data from the UPF.

After a subscription is successful, the DCCF stores a first relationship and a fourth relationship. The first relationship is a correspondence between identifier #1 and identifier #A. The fourth relationship is a correspondence between identifier #2, identifier #A, and the second manner.

S621: The DCCF sends the first relationship and the fourth relationship to the MFAF. Correspondingly, the MFAF receives the first relationship and the fourth relationship.

S622: The UPF sends the first data and the second part of data to the MFAF. Correspondingly, the MFAF receives the first data and the second part of data from the UPF.

The process is the same as S421, and details are not described herein again.

S623: The MFAF sends the first data to NWDAF #1. Correspondingly, NWDAF #1 receives the first data.

The process is the same as S422, and details are not described herein again.

S624: The MFAF obtains the first part of data based on the first data.

The process is the same as S423, and details are not described herein again.

S625: The MFAF sends the first part of data and the second part of data to NWDAF #2. Correspondingly, NWDAF #2 receives the first part of data and the second part of data.

It should be understood that the second data includes the first part of data and the second part of data.

The process is the same as S424, and details are not described herein again.

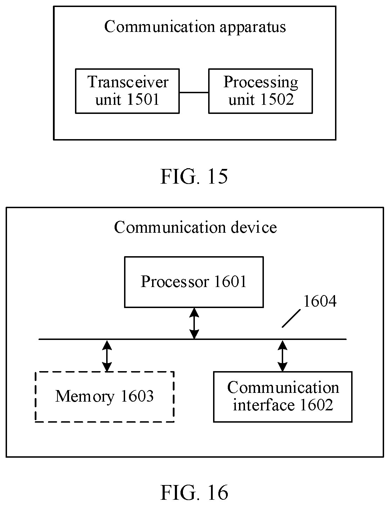

According to the foregoing method, FIG. 15 shows a communication apparatus according to an embodiment of this application. The communication apparatus includes a transceiver unit 1501 and a processing unit 1502.

The transceiver unit 1501 may be configured to implement a corresponding information receiving and sending function. The transceiver unit 1501 may also be referred to as a communication interface or a communication unit. The processing unit 1502 may be configured to perform a processing operation.

For example, the apparatus further includes a storage unit. The storage unit may be configured to store instructions and/or data. The processing unit 1502 may read the instructions and/or the data in the storage unit, to enable the apparatus to implement actions of the apparatus in the foregoing method embodiments.

In a first implementation, the apparatus may be the DCCF network element in the foregoing embodiments, or may be a component (for example, a chip) of the DCCF network element. The transceiver unit and the processing unit may be configured to implement related operations of the DCCF network element in the foregoing method embodiments.

In a second implementation, the apparatus may be the MFAF network element in the foregoing embodiments, or may be a component (for example, a chip) of the MFAF network element. The transceiver unit and the processing unit may be configured to implement related operations of the MFAF network element in the foregoing method embodiments.

In a third implementation, the apparatus may be the UPF network element in the foregoing embodiments, or may be a component (for example, a chip) of the UPF network element. The transceiver unit and the processing unit may be configured to implement related operations of the UPF network element in the foregoing method embodiments.

In a fourth implementation, the apparatus may be the NWDAF network element in the foregoing embodiments, or may be a component (for example, a chip) of the NWDAF network element. The transceiver unit and the processing unit may be configured to implement related operations of the NWDAF network element in the foregoing method embodiments.

It should be understood that a specific process in which the units perform the foregoing corresponding steps is described in detail in the foregoing method embodiments. For brevity, details are not described herein.

It should also be understood that the apparatus herein is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus may be specifically the first network element in the foregoing embodiments, and may be configured to perform the procedures and/or steps corresponding to the first network element in the foregoing method embodiments. Alternatively, the apparatus may be specifically the network management network element in the foregoing embodiments, and may be configured to perform the procedures and/or steps corresponding to the network management network element in the foregoing method embodiments. To avoid repetition, details are not described herein again.

The foregoing communication apparatus has a function of implementing corresponding steps performed by the apparatus in the foregoing method. The function may be implemented by hardware, or may be implemented by executing corresponding software by hardware. The hardware or software includes one or more modules corresponding to the foregoing function. For example, a transceiver unit may be replaced with a transceiver (for example, a sending unit in the transceiver unit may be replaced with a transmitter, and a receiving unit in the transceiver unit may be replaced with a receiver), and another unit such as a processing unit may be replaced with a processor, to separately perform sending and receiving operations and a related processing operation in the method embodiments.

In addition, the transceiver unit 1501 may alternatively be a transceiver circuit (for example, may include a receiving circuit and a sending circuit), and the processing unit may be a processing circuit.

It should be noted that the apparatus in FIG. 15 may be the apparatus in the foregoing method embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

As shown in FIG. 16, an embodiment of this application further provides a communication device, including a processor 1601 and a communication interface 1602. The processor 1601 is configured to execute a computer program or instructions stored in the memory 1603, or read data stored in the memory 1603, to perform the method in the foregoing method embodiments. For example, there are one or more processors 1601. The communication interface 1602 is configured to receive and/or send a signal. For example, the processor 1601 is configured to control the communication interface 1602 to receive and/or send the signal.

For example, as shown in FIG. 16, the communication device further includes a memory 1603. The memory 1603 is configured to store the computer program or the instructions, and/or the data. The memory 1603 and the processor 1601 may be integrated together, or may be disposed separately. For example, there are one or more memories 1603.

For example, the processor 1601, the communication interface 1602, and the memory 1603 are connected to each other through a bus 1604. The bus 1604 may be a peripheral component interconnect (peripheral component interconnect, PCI) bus, an extended industry standard architecture (extended industry standard architecture, EISA) bus, or the like. The bus 1604 may be classified into an address bus, a data bus, a control bus, and the like. For ease of representation, only one thick line is used to represent the bus in FIG. 16, but this does not mean that there is only one bus or only one type of bus.

For example, the processor 1601 is configured to execute the computer program or the instructions stored in the memory 1603, to implement related operations of the DCCF network element in the foregoing method embodiments.

For another example, the processor 1601 is configured to execute the computer program or the instruction stored in the memory 1603, to implement related operations of the MFAF network element in the foregoing method embodiments.

It should be understood that a processor (such as the processor 1601) mentioned in embodiments of this application may be a central processing unit (central processing unit, CPU), a network processor (network processor, NP), or a combination of the CPU and the NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic logic array (generic logic array, GAL), or any combination thereof.

It may be further understood that a memory (such as a memory 1603) mentioned in embodiments of this application may be a volatile memory or a non-volatile memory, or may include a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile storage may be a random access memory (random access memory, RAM), used as an external cache.

The technical solutions provided in embodiments of this application may be applied to various communication systems, for example, a global mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th Generation, 5G) system, or a new radio (new radio, NR) system, and a future 6th generation (6th Generation, 6G) system.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments according to this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located at one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of this application essentially, or the part contributing to conventional technologies, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first network element, a first message and a second message, wherein the first message is used to subscribe to first data, and the second message is used to subscribe to second data;
subscribing, by the first network element, to the first data from a second network element based on the first message;
determining, by the first network element, whether the second data can be obtained based on the first data; and
determining, by the first network element based on a determining result, whether to subscribe to third data from the second network element, wherein the third data comprises all or a part of the second data.

2. The method according to claim 1, wherein
the first message comprises a first association identifier, and the subscribing, by the first network element, to the first data from a second network element comprises:
sending, by the first network element, a third message to the second network element, wherein the third message is used to subscribe to the first data, and the third message comprises a third association identifier; and
the method further comprises:
receiving, by the first network element, a first notification message from the second network element, wherein the first notification message comprises the first data and the third association identifier;
determining, by the first network element based on a first relationship, that the third association identifier in the first notification message corresponds to the first association identifier, wherein the first relationship is a correspondence between the first association identifier and the third association identifier; and
sending, by the first network element, the first data based on the first association identifier.

3. The method according to claim 2, wherein
the determining result is that the second data can be obtained based on the first data, the second message comprises a second association identifier, and the method further comprises:
determining, by the first network element, a first manner in which the second data is obtained based on the first data;
determining, by the first network element based on a second relationship, that the third association identifier in the first notification message corresponds to the second association identifier and the first manner, wherein the second relationship is a correspondence between the second association identifier, the third association identifier, and the first manner;
obtaining, by the first network element, the second data based on the first manner and the first data; and
sending, by the first network element, the second data based on the second association identifier.

4. The method according to claim 2, wherein
the second message comprises a second association identifier, the second data comprises a first part of data and a second part of data, and the determining result is that the first part of data can be obtained based on the first data, but the second part of data cannot be obtained based on the first data; and the method further comprises:
determining, by the first network element, a second manner in which the first part of data is obtained based on the first data;
sending, by the first network element, a fourth message to the second network element, wherein the fourth message is used to subscribe to the second part of data, and the fourth message comprises a fourth association identifier;
determining, by the first network element based on a third relationship, that the fourth association identifier in the first notification message corresponds to the second association identifier, wherein the first notification message further comprises the second part of data and the fourth association identifier, and the third relationship is a correspondence between the second association identifier and the fourth association identifier;
determining, by the first network element based on a fourth relationship, that the third association identifier in the first notification message corresponds to the second association identifier and the second manner, wherein the fourth relationship is a correspondence between the second association identifier, the third association identifier, and the second manner;
obtaining, by the first network element, the first part of data based on the second manner and the first data; and
sending, by the first network element, the first part of data and the second part of data based on the second association identifier.

5. The method according to claim 2, wherein
the second message comprises a second association identifier, the second data comprises a first part of data and a second part of data, and the determining result is that the first part of data can be obtained based on the first data, but the second part of data cannot be obtained based on the first data; and the method further comprises:
sending, by the first network element, a fifth message to the second network element based on the second message, wherein the fifth message is used to subscribe to the second data from the second network element, and the fifth message comprises a fourth association identifier;
determining, by the first network element, a second manner in which the first part of data is obtained based on the first data;
determining, by the first network element based on a third relationship, that the fourth association identifier in the first notification message corresponds to the second association identifier, wherein the first notification message further comprises the second part of data and the fourth association identifier, and the third relationship is a correspondence between the second association identifier and the fourth association identifier;
determining, by the first network element based on a fourth relationship, that the third association identifier in the first notification message corresponds to the second association identifier and the second manner, wherein the fourth relationship is a correspondence between the second association identifier, the third association identifier, and the second manner;
obtaining, by the first network element, the first part of data based on the second manner and the first data; and
sending, by the first network element, the first part of data and the second part of data based on the second association identifier.

6. The method according to claim 5, wherein
the third message is further used to unsubscribe from the first part of data from the second network element.

7. The method according to claim 1, wherein
the first message comprises a first association identifier, and the subscribing, by the first network element, to the first data from a second network element comprises:
sending, by the first network element, a third message to the second network element, wherein the third message is used to subscribe to the first data from the second network element, and the third message comprises a third association identifier and an identifier of a third network element; and
the method further comprises:
sending, by the first network element, a first relationship to the third network element, wherein the first relationship is a correspondence between the first association identifier and the third association identifier.

8. The method according to claim 7, wherein
the second message comprises a second association identifier, and the determining result is that the second data can be obtained based on the first data, and the method further comprises:
determining, by the first network element, a first manner in which the second data is obtained based on the first data; and
sending, by the first network element, a second relationship to the third network element, wherein the second relationship is a correspondence between the second association identifier, the third association identifier, and the first manner.

9. The method according to claim 7, wherein
the second message comprises a second association identifier, the second data comprises a first part of data and a second part of data, and the determining result is that the first part of data can be obtained based on the first data, but the second part of data cannot be obtained based on the first data; and the method further comprises:
determining, by the first network element, a second manner in which the first part of data is obtained based on the first data;
sending, by the first network element, a fourth message to the second network element, wherein the fourth message is used to subscribe to the second part of data, and the fourth message comprises a fourth association identifier; and
sending, by the first network element, a third relationship and a fourth relationship to the third network element, wherein the third relationship is a correspondence between the second association identifier and the fourth association identifier, and the fourth relationship is a correspondence between the second association identifier, the third association identifier, and the second manner.

10. The method according to claim 7, wherein
the second message comprises a second association identifier, the second data comprises a first part of data and a second part of data, and the determining result is that the first part of data can be obtained based on the first data, but the second part of data cannot be obtained based on the first data; and the method further comprises:
sending, by the first network element, a fifth message to the second network element based on the second message, wherein the fifth message is used to subscribe to the second data from the second network element, and the fifth message comprises a fourth association identifier;
determining, by the first network element, a second manner in which the first part of data is obtained based on the first data; and
sending, by the first network element, a third relationship and a fourth relationship to the third network element, wherein the third relationship is a correspondence between the second association identifier and the fourth association identifier, and the fourth relationship is a correspondence between the second association identifier, the third association identifier, and the second manner.

11. The method according to claim 10, wherein
the third message is further used to unsubscribe from the first part of data from the second network element.

12. The method according to claim 3 or 8, wherein the method further comprises:
sending, by the first network element, a fifth message to the second network element based on the second message, wherein the fifth message is used to subscribe to the second data from the second network element, and the fifth message comprises a fourth association identifier; and the third message is further used to unsubscribe from the second data from the second network element.

13. The method according to any one of claims 1 to 12, wherein
the first message further comprises a plurality of data types associated with the first data, a plurality of reporting conditions, and a logical relationship between the plurality of reporting conditions, and the plurality of data types are in one-to-one correspondence with the plurality of reporting conditions; and
the method further comprises:
when the logical relationship is met, receiving, by the first network element, the first data from the second network element.

14. The method according to any one of claims 1 to 13, wherein
the first network element is a data collection coordination function network element, the second network element is a user plane function network element, and the third network element is a messaging framework adaptor function network element; and
the receiving, by a first network element, a first message and a second message comprises:
receiving, by the first network element, the first message from a first network data analytics function network element, and receiving the second message from a second network data analytics function network element.

15. The method according to any one of claims 1 to 14, wherein
a data granularity of the first data is less than a data granularity of the second data.

16. A communication apparatus, comprising:
a transceiver unit and a processing unit connected to the transceiver unit, wherein
the transceiver unit is configured to receive a first message and a second message, wherein the first message is used to subscribe to first data, and the second message is used to subscribe to second data;
the transceiver unit is further configured to subscribe to the first data from a second network element based on the first message;
the processing unit is configured to determine whether the second data can be obtained based on the first data; and
the processing unit is further configured to determine, based on a determining result, whether to subscribe to third data from the second network element, wherein the third data comprises all or a part of the second data.

17. The apparatus according to claim 16, wherein
the first message comprises a first association identifier;
the transceiver unit is further configured to send a third message to the second network element, wherein the third message is used to subscribe to the first data, and the third message comprises a third association identifier;
the transceiver unit is further configured to receive a first notification message from the second network element, wherein the first notification message comprises the first data and the third association identifier;
the processing unit is further configured to determine, based on a first relationship, that the third association identifier in the first notification message corresponds to the first association identifier, wherein the first relationship is a correspondence between the first association identifier and the third association identifier; and
the transceiver unit is further configured to send the first data based on the first association identifier.

18. The apparatus according to claim 17, wherein
the determining result is that the second data can be obtained based on the first data, and the second message comprises a second association identifier;
the processing unit is further configured to determine a first manner in which the second data is obtained based on the first data;
the processing unit is further configured to determine, based on a second relationship, that the third association identifier in the first notification message corresponds to the second association identifier and the first manner, wherein the second relationship is a correspondence between the second association identifier, the third association identifier, and the first manner;
the processing unit is further configured to obtain the second data based on the first manner and the first data; and
the transceiver unit is further configured to send the second data based on the second association identifier.

19. The apparatus according to claim 17, wherein
the second message comprises a second association identifier, the second data comprises a first part of data and a second part of data, and the determining result is that the first part of data can be obtained based on the first data, but the second part of data cannot be obtained based on the first data;
the processing unit is further configured to determine a second manner in which the first part of data is obtained based on the first data;
the transceiver unit is further configured to send a fourth message to the second network element, wherein the fourth message is used to subscribe to the second part of data, and the fourth message comprises a fourth association identifier;
the processing unit is further configured to determine, based on a third relationship, that the fourth association identifier in the first notification message corresponds to the second association identifier, wherein the first notification message further comprises the second part of data and the fourth association identifier, and the third relationship is a correspondence between the second association identifier and the fourth association identifier;
the processing unit is further configured to determine, based on a fourth relationship, that the third association identifier in the first notification message corresponds to the second association identifier and the second manner, wherein the fourth relationship is a correspondence between the second association identifier, the third association identifier, and the second manner;
the processing unit is further configured to obtain the first part of data based on the second manner and the first data; and
the transceiver unit is further configured to send the first part of data and the second part of data based on the second association identifier.

20. The apparatus according to claim 17, wherein
the second message comprises a second association identifier, the second data comprises a first part of data and a second part of data, and the determining result is that the first part of data can be obtained based on the first data, but the second part of data cannot be obtained based on the first data;
the transceiver unit is further configured to send a fifth message to the second network element based on the second message, wherein the fifth message is used to subscribe to the second data from the second network element, and the fifth message comprises a fourth association identifier;
the processing unit is further configured to determine a second manner in which the first part of data is obtained based on the first data;
the processing unit is further configured to determine, based on a third relationship, that the fourth association identifier in the first notification message corresponds to the second association identifier, wherein the first notification message further comprises the second part of data and the fourth association identifier, and the third relationship is a correspondence between the second association identifier and the fourth association identifier;
the processing unit is further configured to determine, based on a fourth relationship, that the third association identifier in the first notification message corresponds to the second association identifier and the second manner, wherein the fourth relationship is a correspondence between the second association identifier, the third association identifier, and the second manner;
the processing unit is further configured to obtain the first part of data based on the second manner and the first data; and
the transceiver unit is further configured to send the first part of data and the second part of data based on the second association identifier.

21. The apparatus according to claim 20, wherein
the third message is further used to unsubscribe from the first part of data from the second network element.

22. The apparatus according to claim 16, wherein
the first message comprises a first association identifier;
the transceiver unit is further configured to send a third message to the second network element, wherein the third message is used to subscribe to the first data from the second network element, and the third message comprises a third association identifier and an identifier of a third network element; and
the transceiver unit is further configured to send a first relationship to the third network element, wherein the first relationship is a correspondence between the first association identifier and the third association identifier.

23. The apparatus according to claim 22, wherein
the second message comprises a second association identifier, and the determining result is that the second data can be obtained based on the first data;
the processing unit is further configured to determine a first manner in which the second data is obtained based on the first data; and
the transceiver unit is further configured to send a second relationship to the third network element, wherein the second relationship is a correspondence between the second association identifier, the third association identifier, and the first manner.

24. The apparatus according to claim 22, wherein
the second message comprises a second association identifier, the second data comprises a first part of data and a second part of data, and the determining result is that the first part of data can be obtained based on the first data, but the second part of data cannot be obtained based on the first data;
the processing unit is further configured to determine a second manner in which the first part of data is obtained based on the first data;
the transceiver unit is further configured to send a fourth message to the second network element, wherein the fourth message is used to subscribe to the second part of data, and the fourth message comprises a fourth association identifier; and
the transceiver unit is further configured to send a third relationship and a fourth relationship to the third network element, wherein the third relationship is a correspondence between the second association identifier and the fourth association identifier, and the fourth relationship is a correspondence between the second association identifier, the third association identifier, and the second manner.

25. The apparatus according to claim 22, wherein
the second message comprises a second association identifier, the second data comprises a first part of data and a second part of data, and the determining result is that the first part of data can be obtained based on the first data, but the second part of data cannot be obtained based on the first data;
the transceiver unit is further configured to send a fifth message to the second network element based on the second message, wherein the fifth message is used to subscribe to the second data from the second network element, and the fifth message comprises a fourth association identifier;
the processing unit is further configured to determine a second manner in which the first part of data is obtained based on the first data; and
the transceiver unit is further configured to send a third relationship and a fourth relationship to the third network element, wherein the third relationship is a correspondence between the second association identifier and the fourth association identifier, and the fourth relationship is a correspondence between the second association identifier, the third association identifier, and the second manner.

26. The apparatus according to claim 25, wherein
the third message is further used to unsubscribe from the first part of data from the second network element.

27. The apparatus according to claim 18 or 23, wherein
the transceiver unit is further configured to send a fifth message to the second network element based on the second message, wherein the fifth message is used to subscribe to the second data from the second network element, and the fifth message comprises a fourth association identifier; and
the third message is further used to unsubscribe from the second data from the second network element.

28. The apparatus according to any one of claims 16 to 27, wherein
the first message further comprises a plurality of data types associated with the first data, a plurality of reporting conditions, and a logical relationship between the plurality of reporting conditions, and the plurality of data types are in one-to-one correspondence with the plurality of reporting conditions; and
when the logical relationship is met, the transceiver unit is further configured to receive the first data from the second network element.

29. The apparatus according to any one of claims 16 to 28, wherein
the communication apparatus is a data collection coordination function network element, the second network element is a user plane function network element, and the third network element is a messaging framework adaptor function network element; and
the transceiver unit is further configured to receive the first message from a first network data analytics function network element, and receive the second message from a second network data analytics function network element.

30. The apparatus according to any one of claims 16 to 29, wherein
a data granularity of the first data is less than a data granularity of the second data.

31. A computer-readable storage medium, comprising a computer program or instructions, wherein when the computer program or the instructions are run on a computer, the computer is enabled to perform the method according to any one of claims 1 to 15.

32. A computer program product, comprising instructions, wherein when the instructions are run on a computer, the computer is enabled to perform the method according to any one of claims 1 to 15.

33. A communication system, comprising:
a first network element, configured to perform the method according to any one of claims 1 to 15; and
a second network element, configured to send subscribed data to the first network element.
